# EUROPEAN PATENT APPLICATION

(11) **EP 1 296 475 A1**
(43) Date of publication of application: **26.03.2003**
(21) Application number: 02705351.1
(22) Date of filing: 19.03.2002
(51) Int. Cl.: H04J 13/04

(54) **COMMUNICATION APPARATUS, COMMUNICATION METHOD, COMMUNICATION PROGRAM, RECORDING MEDIUM, MOBILE STATION, BASE STATION, AND COMMUNICATION SYSTEM**

(30) Priority: 19.03.2001 JP 2001079207
(71) Applicant: MATSUSHITA ELECTRIC INDUSTRIAL CO., LTD., Kadoma-shi, Osaka 571-0050 (JP)
(72) Inventor: UESUGI, Mitsuru, Yokosuka-shi, Kanagawa 238-0048 (JP); HIRAMATSU, Katsuhiko, Yokosuka-shi, Kanagawa 238-0031 (JP); MIYA, Kazuyuki, Kawasaki-shi, Kanagawa 215-0021 (JP); KATO, Osamu, Yokosuka-shi, Kanagawa 237-0066 (JP)
(74) Representative: Grünecker, Kinkeldey, Stockmair & Schwanhäusser Anwaltssozietät
(86) International application number: JP0202612
(87) International publication number: WO02075994

(57) **Abstract**

The present invention has an object to provide a communication equipment, a communication method, a communication program, a recording medium, a mobile station, a base station, and a communication system, which are capable of assuring the quality of service.

In order to achieve the above object of the present invention, a packet discriminating portion 101 distributes packets having different qualities of service into three buffer groups consisting of a real-time RT buffer group, a quasi real-time QRT buffer group, and a non real-time NRT buffer group based on additional information attached to the packets to store the packets in response to empty states of respective buffers in the K buffer groups, a boundary assignment controlling portion 105 circulates through three buffer groups every predetermined unit time to check presence of stored packets and circulates through respective buffers in the buffer group having the stored packet to pick up the stored packets sequentially, and a CDMA-multiplexing processing portion 111 code-multiplexes the packets that are picked up by the boundary assignment controlling portion 105 every unit time to get a transmitted output "ot".

## Description

### <Technical Field>

The present invention relates to a communication equipment, a communication method, a program used to execute the communication method, a recording medium for recording the program, a mobile station, a base station, and a communication system and, more particularly, a communication equipment, a communication method, a communication program, a recording medium, a mobile station, a base station, and a communication system, which are capable of assuring quality of service by executing signal assignment of up signals and down signals with regard to the quality of service in the packet communication using the CDMA (Code Division Multiple Access) system, etc.

### <Background Art>

The signal assignment of up signals and down signals executed in the packet communication using the CDMA system in the related art will be explained with reference to FIG.13 to FIG.19C hereunder. FIG.13 is a configurative view of a signal-assignment executing portion in a communication equipment (base station) in the related art. FIG.14 is an explanatory view explaining an outline of a communication method (assigning method of down signals) in the related art. FIGs.15A, 15B, and 15C are time charts showing which transmitted outputs can be obtained in response to particular received inputs (packet input group) in the related art. FIG.16A to FIG.19C are explanatory views explaining stored states of packets in respective buffers BFRT1 to BFRT6, BFQRT1 to BFQRT4, BFNRT1 to BFNRT4 in a first frame output period (time slots T11 to T18), a second frame output period (time slots T21 to T28), a third frame output period (time slots T31 to T38), and a fourth frame output period (time slots T41 to T48) in the related art respectively.

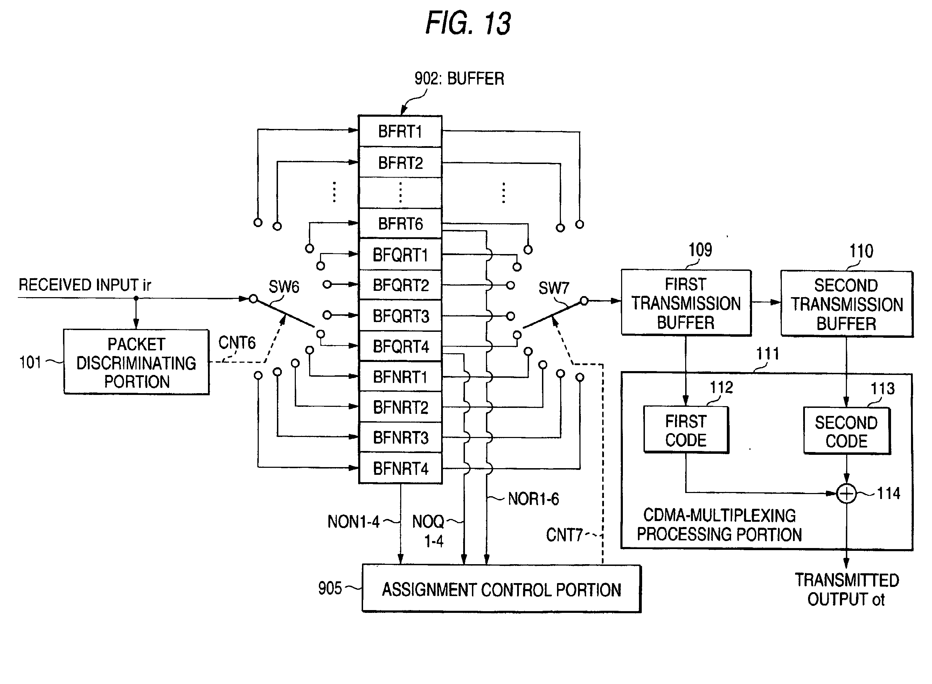

First, a configuration of a signal-assignment executing portion of the communication equipment in the related art will be explained with reference to FIG.13. In the same figure, the portion is constructed to have a packet discriminating portion 101, buffers BFRT1 to BFRT6, BFQRT1 to BFQRT4, BFNRT1 to BFNRT4, an assignment control portion 905, a first transmission buffer 109, a second transmission buffer 110, a CDMA-multiplexing processing portion 111, and switches SW6, SW7.

The packet discriminating portion 101 allocates a packet of a received input ir to a predetermined buffer in response to empty states of the buffers BFRT1 to BFRT6, BFQRT1 to BFQRT4, BFNRT1 to BFNRT4. More particularly, a route for the predetermined buffer is established by switching the switch SW6 according to a control signal CNT6.

In this case, in the present related art, delay qualities (real-time RT, quasi real-time QRT, and non real-time NRT) are discriminated by the packet discriminating portion 101 based on additional information (header) attached to the packets, and then the packets are distributed to the RT buffer group BFRT1 to BFRT6, the QRT buffer group BFQRT1 to BFQRT4, the NRT buffer group BFNRT1 to BFNRT4 according to the discrimination result respectively. This is because such distribution makes it possible to compare the related art with embodiments of the present invention described later. Therefore, when the signal assignment method in the related art is applied, no essential difference is noticed depending on whether or not such distribution is employed.

Here, as the service provided by the communication system in which the base station in the present related art is contained, there are voice call, Internet access, transmission/reception of the electronic mail, etc. As the delay qualities, the data communication such as the voice call, etc., the delay tolerance of which is small, corresponds to the real-time RT communication, the data communication such as Internet response, etc., which a relatively high responsibility is required of, corresponds to the quasi real-time QRT communication, and the data communication such as the electronic mail, etc., the delay tolerance of which is relatively large, corresponds to the non real-time NRT communication.

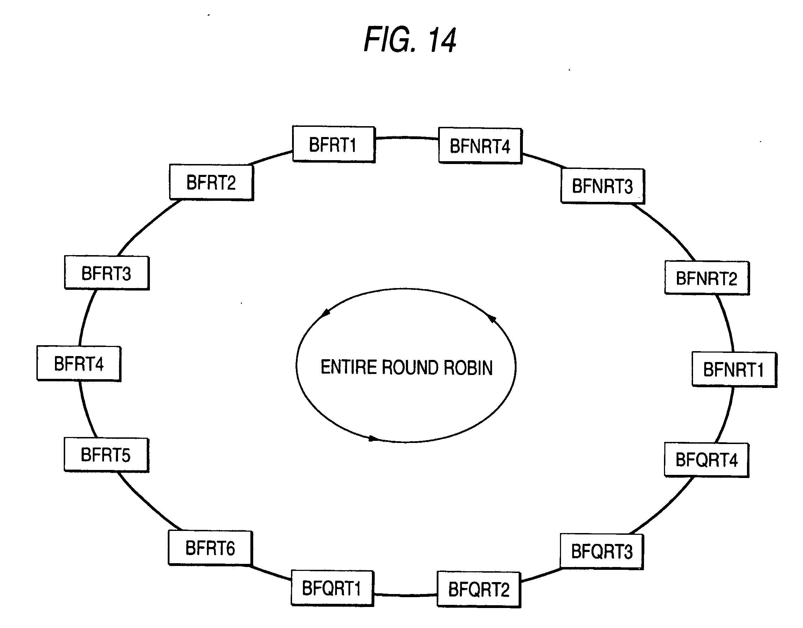

Then, as shown in FIG.14, while checking the presence of the stored packet in respective buffers based on status information NOR1 to NOR6, NOQ1 to NOQ4, NON1 to NON4 supplied from the buffers BFRT1 to BFRT6, BFQRT1 to BFQRT4, and BFNRT1 to BFNRT4, the assignment control portion 905 circulates respective buffers like BFRT1→BFRT2 →...→BFRT6→BFQRT1...→BFQRT4→BFNRT1→...→BFNRT4→BFRT1 →... to pick up the stored packet sequentially. In other words, the round robin approach that permits to assign the look-up chance to every buffer fairly is employed. More particularly, a route for the first transmission buffer 109 is established by switching the switch SW7 based on the control signal CNT7.

Also, the first transmission buffer 109 and the second transmission buffer 110 are two transmission buffers that are prepared since the number of multiplexing codes in CDMA is set to 2. Respective outputs are diffused as a first code 112 and a second code 113 in the CDMA-multiplexing processing portion 111, and then multiplexed by an adder 114 to get a transmitted output ot.

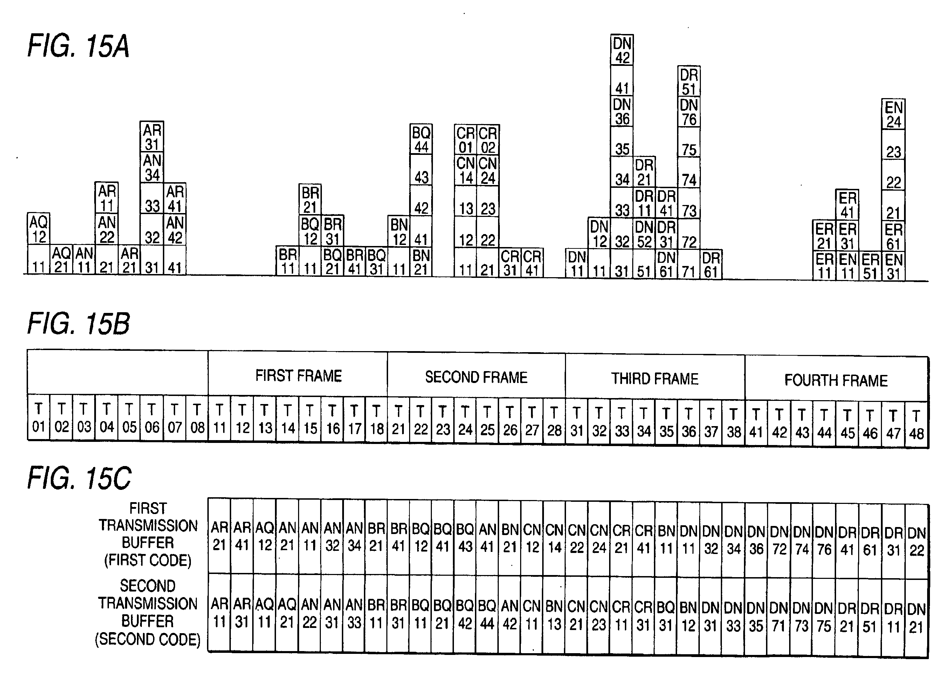

Next, while taking account of the transition of stored states of the packet in respective buffers BFRT1 to BFRT6, BFQRT1 to BFQRT4, and BFNRT1 to BFNRT4, the communication method in the communication equipment in the related art, i.e., which transmitted output can be obtained in response to the particular received inputs (packet input group), will be explained with reference to FIG.15A to FIG.19C hereunder. In this particular example, explanation will be made under the assumption that the transmitted output ot has the code number=2 and 8 slots per one frame. Also, explanation will be made in the situation that, as shown FIG.15B, respective time slots of the output frame, i.e., time slots T01 to T08 in the pre-output period, time slots T11 to T18 in the first frame output period, time slots T21 to T28 in the second frame output period, time slots T31 to T38 in the third frame output period, and time slots T41 to T48 in the fourth frame output period are employed as a time base.

FIG.15A shows a packet group of the received inputs ir in respective time slots. Names are appended to respective packets. For example, "AQ11, AQ12" denote that this packet is one QRT (quasi real-time) packet in an input A group and elements of the packet are AQ11 and AQ12. As can be seen from the same figure, since the RT (real-time) packet is the sound data, only a short packet having one element is present and also this packet is received at a regular interval every eight time slots. In contrast, with respect to the QRT (quasi real-time) packet such as the response data for the Internet access, etc., the packets that have one, two, or four elements and are different in size are received at an irregular interval. Also, with respect to the NRT (non real-time) packet such as the electronic mail data, etc., the packets having one, two, four, or six elements and having various sizes are received at an irregular interval.

FIG.15C shows contents of the first transmission buffer 109 and the second transmission buffer 110 in respective time slots from the first frame to the fourth frame, i.e., contents of the multiplexed first code 112 and the multiplexed second code 113.

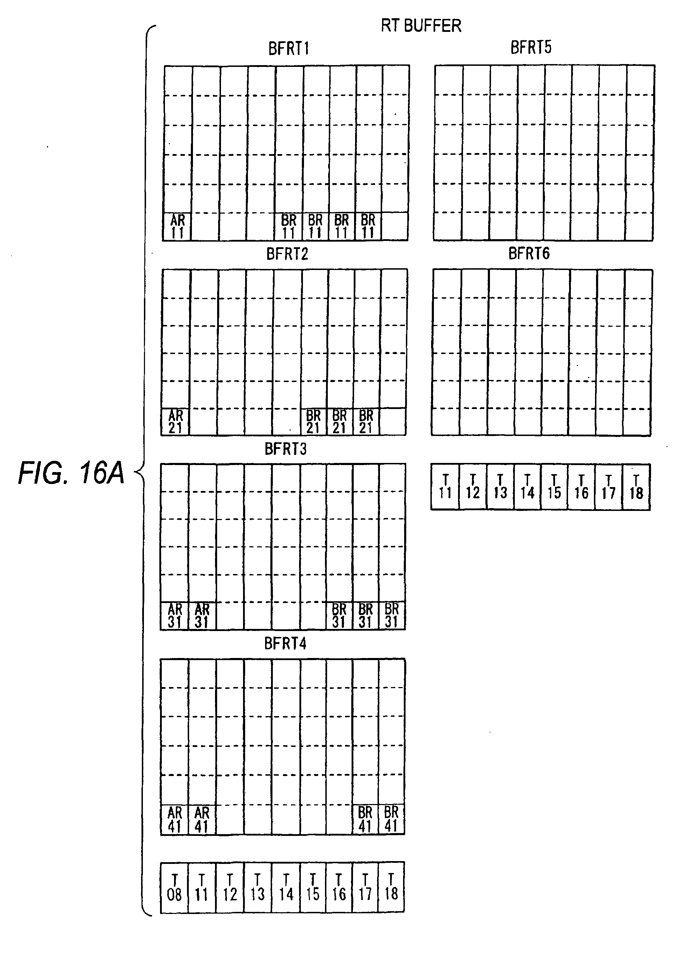

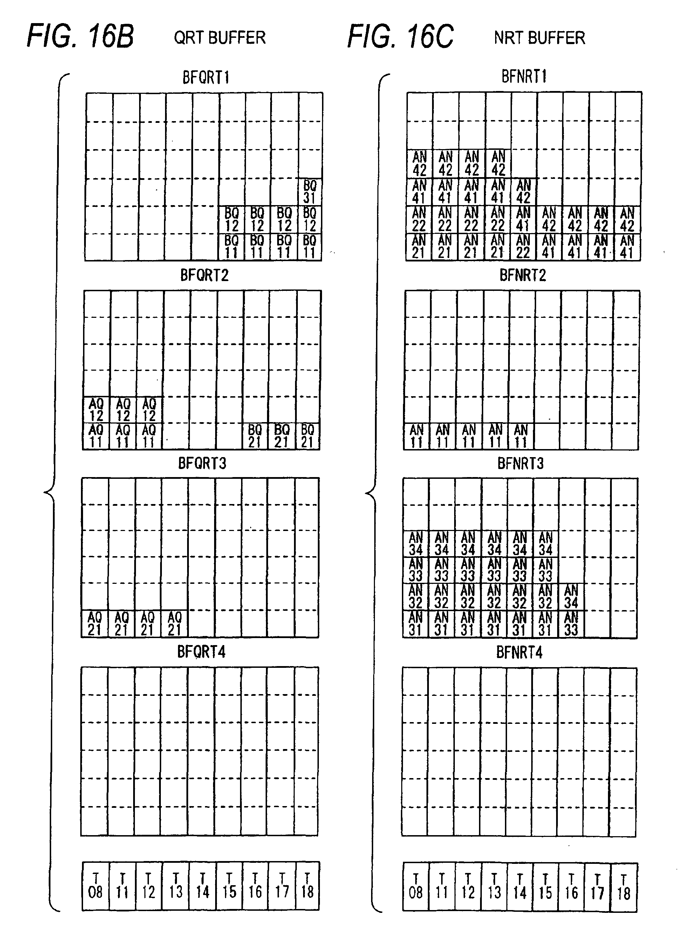

FIGs.16A, 16B, and 16C show transitions of the stored packets in respective buffers in the first frame output period (time slots T11 to T18) and the time slot T08 in pre-output period. The looking-up of the buffer by the round robin approach is started from the RT buffer BFRT1, and an RT packet AR11 and an RT packet AR21 are output sequentially from the RT buffer BFRT1 and the RT buffer BFRT2 in the time slot T08, and they are multiplexed in the time slot T11 and are transmitted/output.

If attention will be still paid only to buffer outputs similarly in the following, an RT packet AR31 and an RT packet AR41 are output sequentially from the RT buffer BFRT3 and the RT buffer BFRT4 in the time slot T11 respectively. Then, the looking-up of the buffer reaches the QRT buffer BFQRT2 in the time slot T12 based on the round robin, and QRT packets AQ11, AQ12 are output sequentially from this buffer. Then, a QRT packet AQ21 and an NRT packet AN21 are output sequentially from the QRT buffer BFQRT3 and the NRT buffer BFNRT1 in the time slot T13 respectively. Also, NRT packets AN22, AN11 are output sequentially from the NRT buffers BFNRT1, BFNRT2 in the time slot T14 respectively, and NRT packets AN31, AN32 are output sequentially from the NRT buffer BFNRT3 in the time slot T15 respectively, and NRT packets AN33, AN34 are output sequentially from the NRT buffer BFNRT3 in the time slot T16 respectively. In addition, the looking-up of the buffer goes back to the RT buffer BFRT1 in the time slot T17 based on the round robin, and RT packets BR11, BR21 are output sequentially from the RT buffers BFRT1, BFRT2 respectively. Then, RT packets BR31, BR41 are output sequentially from the RT buffers BFRT3, BFRT4 in the time slot T18 respectively.

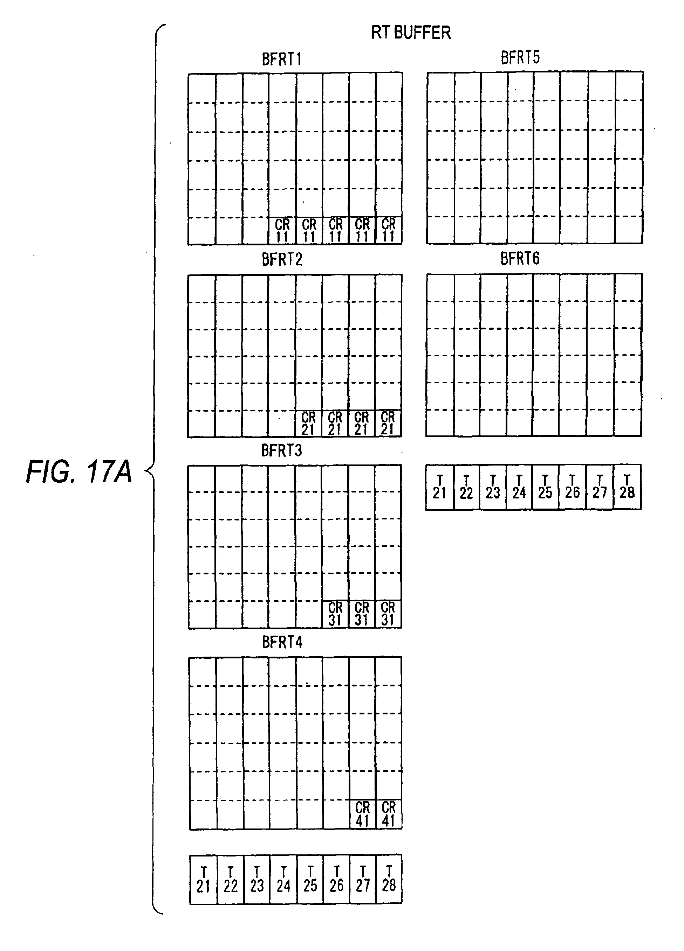

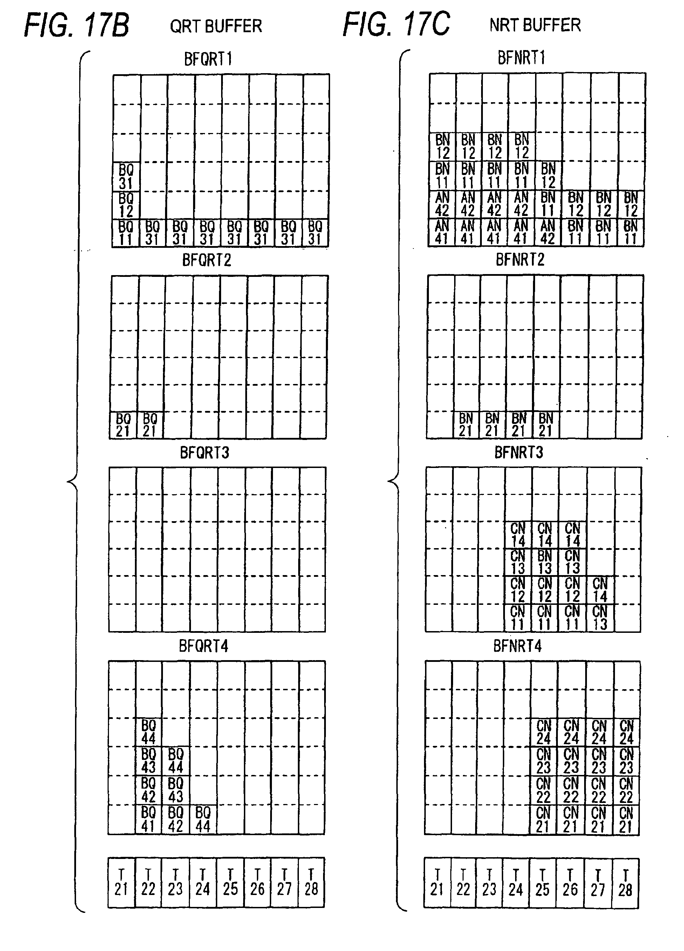

Then, similarly in FIGs.17A, 17B, and 17C (for the sake of simplicity, their names are omitted), BQ11, BQ12 are output sequentially from BFQRT1 in T21, then BQ21, BQ41 are output sequentially from BFQRT2, BFQRT4 in T22, then BQ42, BQ43 are output sequentially from BFQRT4 in T23, then BQ44, BN41 are output sequentially from BFQRT4, BFNRT1 in T24, then BN42, BN21 are output sequentially from BFNRT1, BFNRT2 in T25, then CN11, CN12 are output sequentially from BFNRT3 in T26, then CN13, CN14 are output sequentially from BFNRT3 in T27, and then CN21, CN22 are output sequentially from BFNRT4 in T28.

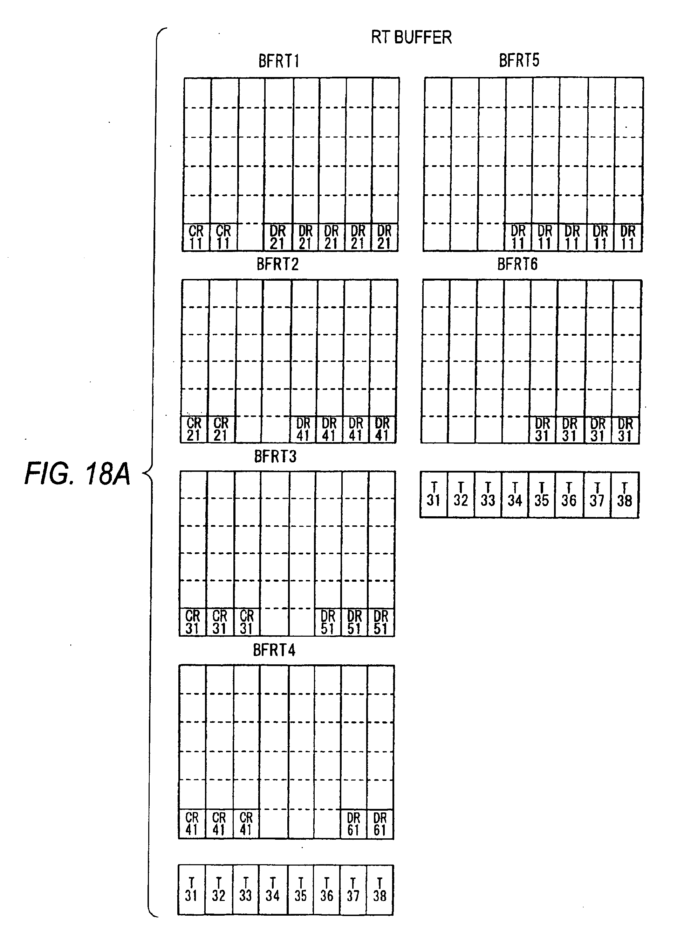

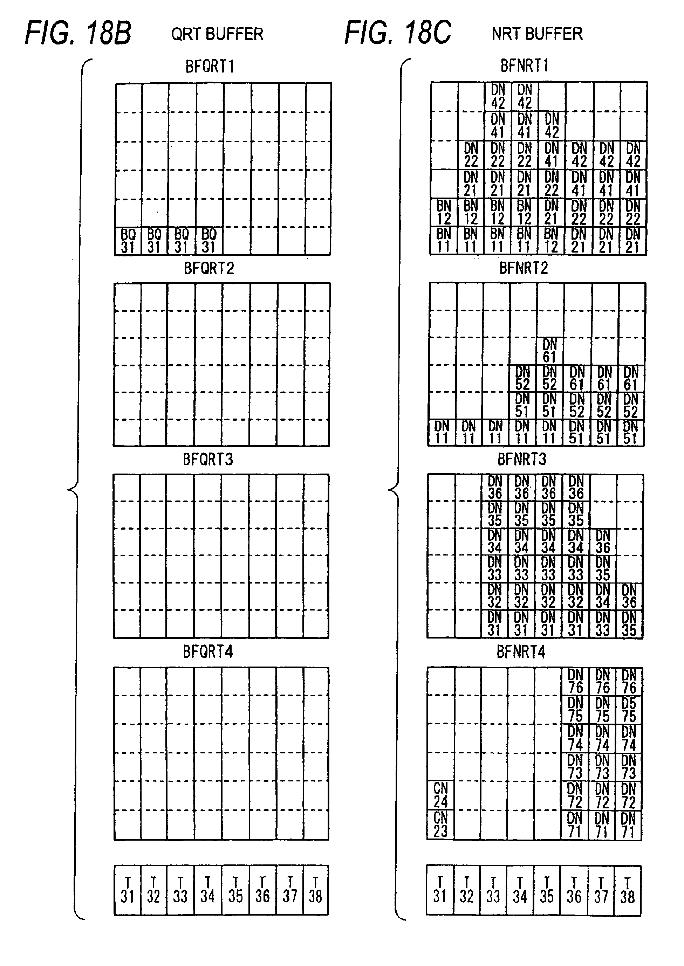

Also, similarly in FIGs.18A, 18B, and 18C, CN23, CN24 are output sequentially from BFNRT4 in T31, then CR11, CR21 are output sequentially from BFRT1, BFRT2 in T32, then CR31, CR41 are output sequentially from BFRT3, BFRT4 in T33, then BQ31, BN11 are output sequentially from BFQRT1, BFNRT1 in T34, then BN12, DN11 are output sequentially from BFNRT1, BFNRT2 in T35, then DN31, DN32 are output sequentially from BFNRT3 in T36, then DN33, DN34 are output sequentially from BFNRT3 in T37, and then DN35, DN36 are output sequentially from BFNRT3 in T38.

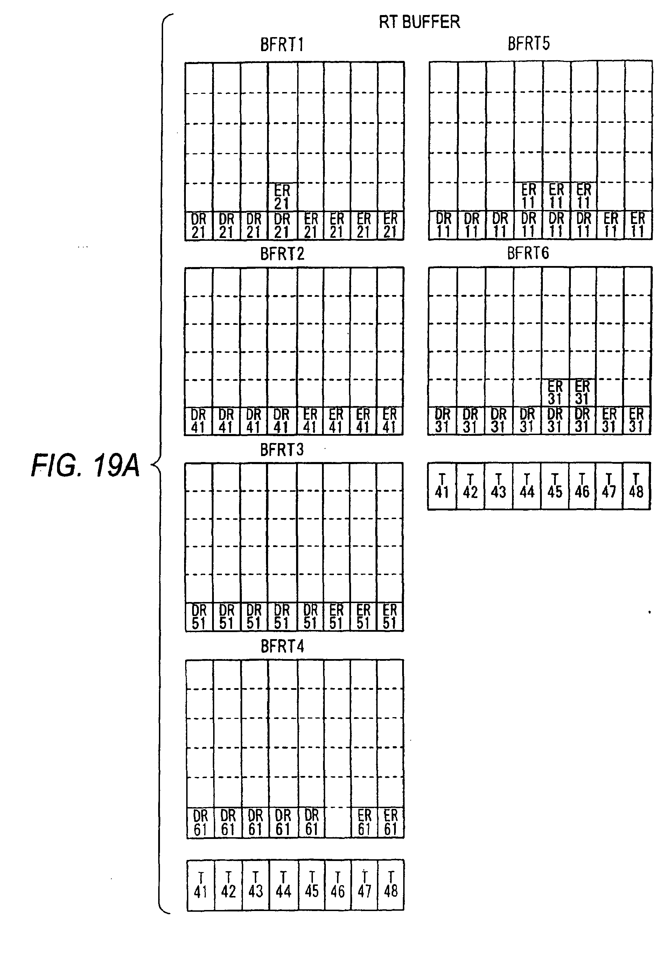

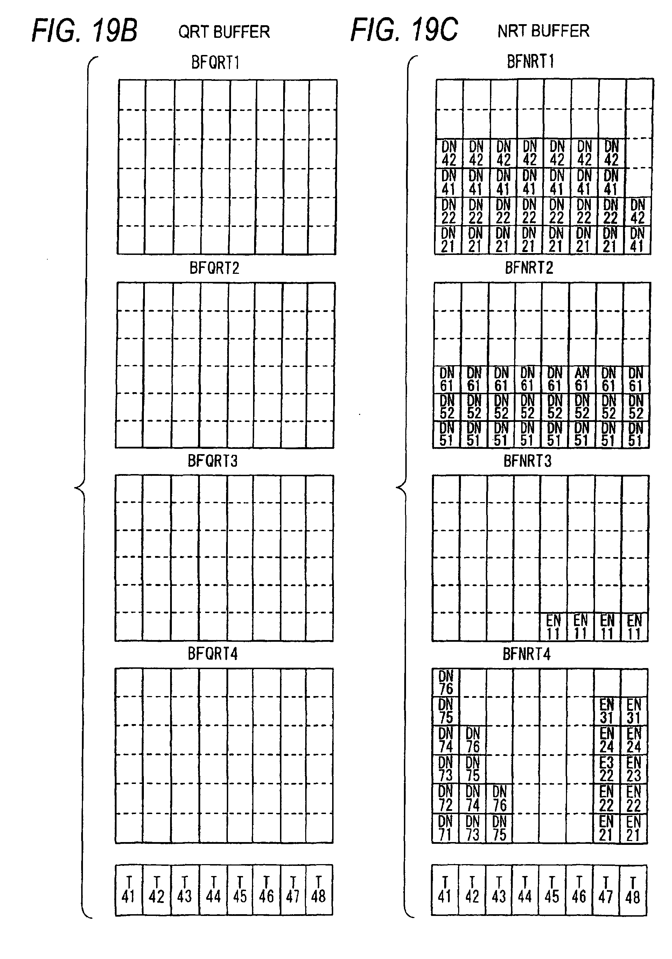

In addition, similarly in FIGS.19A, 19B, and 19C, DN71, DN72 are output sequentially from BFNRT4 in T41, then DN73, DN74 are output sequentially from BFNRT4 in T42, then DN75, DN76 are output sequentially from BFNRT4 in T43, then DR21, CR41 are output sequentially from BFRT1, BFRT2 in T44, then DR51, CR61 are output sequentially from BFRT3, BFRT4 in T45, then DR11, CR31 are output sequentially from BFRT5, BFRT6 in T46, then DN21, DN22 are output sequentially from BFNRT1 in T47, and then DN51, DN52 are output sequentially from BFNRT2 in T48.

As described above, in the communication equipment and the communication method in the related art, the packet having any delay quality such as RT (real-time) packet of the sound data, etc., QRT (quasi real-time) packet of the response data in the Internet access, etc., or NRT (non real-time) packet of the electronic mail data, etc. can be assigned fairly by the round robin approach. Therefore, if the large NRT packet is present, the delay is caused in the RT packet that has the small delay tolerance. In the above particular example (see FIGs.15A, 15B, and 15C), in the time slots T43 to T46 n the fourth frame, such a situation is brought about that the RT packets DR11 to DR31 have not been sent out yet when subsequent RT packets ER11 to ER31 arrive at there.

Also, as described above, various types of packets are present, and they have different quality of service (QoS) such as the delay quality, or the like respectively. Out of them, severe limitation of the delay time is particularly imposed on the sound data, etc. Also, since the sound packet must be decoded finally at a regular interval, following problems are caused if delay fluctuation (delay jitter) is present. That is, since decoding delay of the sound packet is dominated by the maximum delay time, the buffer is required to absorb the delay jitter (on the side at which the decoding is executed). Thus, the buffer having the larger capacity is needed as the delay jitter is increased larger. For example, in the line in which the delay of the sound packet becomes 1 [ms], 5 [ms], 3 [ms], 8 [ms], 2 [ms],..., the sound is decoded to meet the maximum delay time of 8 [ms]. As a result, in order to absorb this delay jitter, the buffer having a size to compensate 8-1=7 [ms] should be provided.

In the communication equipment and the communication method in the related art, in the particular example (see FIGs.15A, 15B, and 15C), the sending interval of the RT packet is varied, and thus the delay jitter of the RT packet is present. Also, it is apparent that, if the large NRT packet is present, the delay jitter of the RT packet is further increased. With respect to such RT packet having the severe limitation of the delay time, an approach for applying the signal assignment to the RT packet prior to the packets (QRT packet, NRT packet) having other delay quality every time when the RT packet occurs may be considered. But it is difficult to execute this assignment control in a moment.

In other words, in the communication equipment and the communication method in the related art, it is difficult to assign the signals having various required qualities so as to satisfy all requirements. Also, in the CDMA system, if the signals having different qualities of service (QoS) are multiplexed simultaneously, the transmission power is largely different owing to difference in required quality. In particular, in the multipath environment, etc., it is difficult to hold the signal quality of a small power.

The present invention has been made in view of the above circumstances in the related art, and it is an object of the present invention to provide a communication equipment, a communication method, a communication program, a recording medium, a mobile station, a base station, and a communication system, which are capable of assuring quality of service such as delay quality, etc. by executing signal assignment of up signals and down signals with regard to the quality of service in the packet communication using the CDMA, etc.

### <Disclosure of the Invention>

In order to overcome the above subjects, a communication equipment set forth in claim 1 of the present invention comprises a discriminating means for distributing signals having different qualities of service every quality of service; a boundary assignment controlling means for assigning the signals, which are distributed every quality of service, to different times; and a code- multiplexing processing means for code-multiplexing the signals every time that is assigned by the boundary assignment controlling means.
Also, a communication equipment set forth in claim 2 of the present invention comprises a plurality of buffer groups partitioned into groups every quality of service; a discriminating means for distributing packets having different qualities of service into the plurality of buffer groups based on additional information attached to the packets; a boundary assignment controlling means for assigning the packets, which are stored in the plurality of buffer groups, to different times every buffer group to pick up the packets; and a code-multiplexing processing means for code-multiplexing the packets that are picked up by the boundary assignment controlling means every different time.

Also, a communication equipment set forth in claim 3 of the present invention comprises K (K is an integral number in excess of 2) buffer groups partitioned into K groups from a first group to a K-th group every quality of service; a discriminating means for distributing packets having different qualities of service into the K buffer groups based on additional information attached to the packets to store the packets in response to empty states of respective buffers in the K buffer groups; a boundary assignment controlling means for circulating through the K buffer groups every predetermined unit time to check presence of stored packets, and circulating through respective buffers in the buffer group having the stored packet to pick up the stored packets sequentially; and a code-multiplexing processing means for code-multiplexing the packets that are picked up by the boundary assignment controlling means every unit time.

Also, in a communication equipment set forth in claim 4 of the present invention, in the communication equipment according to any of claims 1 to 3, the boundary assignment controlling means sets a time width or a number of unit times every quality of service to change with a time when the signals or the packets are to be assigned to the different times or the unit time.
Also, in a communication equipment set forth in claim 5 of the present invention, in the communication equipment according to any of claims 1 to 4, the boundary assignment controlling means executes an assignment of the signals or the packets to the different times or the unit time in compliance with priorities based on the quality of service of the signals or the packets.

Also, in a communication equipment set forth in claim 6 of the present invention, in the communication equipment according to any of claims 1 to 5, the quality of service is a delay quality that represents delay tolerance or fluctuation in data transmission.
Also, in a communication equipment set forth in claim 7 of the present invention, in the communication equipment according to claim 6, the delay quality is real time whose degree of delay tolerance is less than a first tolerance, non real time whose degree of delay tolerance is more than a second tolerance, or quasi real time whose degree of delay tolerance is in a range from the first tolerance to the second tolerance.
Also, in a communication equipment set forth in claim 8 of the present invention, in the communication equipment according to claim 6, the delay quality is real time whose delay fluctuation is less than a first fluctuation threshold, non real time whose delay fluctuation is more than a second fluctuation threshold, or quasi real time whose delay fluctuation is in a range from the first fluctuation threshold to the second fluctuation threshold.

Also, in a communication equipment set forth in claim 9 of the present invention, in the communication equipment according to claim 7 or 8, the boundary assignment controlling means executes assignment of the signals or the packets to the different times or the unit time in order of the real time, the quasi real time, and the non real time.

Also, in the communication equipment according to any of claims 1 to 9, a communication equipment set forth in claim 10 of the present invention further comprises a call-connection controlling means for controlling a connection of call to other station; and wherein, when the assignment of the signals or the packets to the different times or the unit time is to be executed at a regular time interval, the boundary assignment controlling means sets a predetermined time width or a predetermined number of unit times to the quality of service with a highest priority at a first interval of the regular time interval based on numbers of connection of call, which are connected by the call-connection controlling means.

Also, a communication method set forth in claim 11 of the present invention comprises a discriminating step of distributing signals having different qualities of service every quality of service; a boundary assignment controlling step of assigning the signals, which are distributed every quality of service, to different times; and a code-multiplexing processing step of code-multiplexing the signals every time that is assigned by the boundary assignment controlling means.

Also, a communication method set forth in claim 12 of the present invention for a communication equipment having a plurality of buffer groups partitioned into groups every quality of service, comprises a discriminating step of distributing packets having different qualities of service into the plurality of buffer groups based on additional information attached to the packets; a boundary assignment controlling step of assigning the packets, which are stored in the plurality of buffer groups, to different times every buffer group to pick up the packets; and a code-multiplexing processing step of code-multiplexing the packets that are picked up by the boundary assignment controlling step every different time.

Also, a communication method set forth in claim 13 of the present invention for a communication equipment having K (K is an integral number in excess of 2) buffer groups partitioned into K groups from a first group to a K-th group every quality of service, comprises a discriminating step of distributing packets having different qualities of service into the K buffer groups based on additional information attached to the packets to store the packets in response to empty states of respective buffers in the K buffer groups; a boundary assignment controlling step of circulating through the K buffer groups every predetermined unit time to check presence of stored packets, and circulating through respective buffers in the buffer group having the stored packet to pick up the stored packets sequentially; and a code-multiplexing processing step of code-multiplexing the packets that are picked up by the boundary assignment controlling step every unit time.

Also, in a communication method set forth in claim 14 of the present invention, in the communication method according to any of claims 11 to 13, the boundary assignment controlling step sets a time width or a number of unit times every quality of service to change with a time when the signals or the packets are to be assigned to the different times or the unit time.

Also, in a communication method set forth in claim 15 of the present invention, in the communication method according to any of claims 11 to 14, the boundary assignment controlling step executes an assignment of the signals or the packets to the different times or the unit time in compliance with priorities based on the quality of service of the signals or the packets.

Also, in a communication method set forth in claim 16 of the present invention, in the communication method according to any of claims 11 to 15, the quality of service is a delay quality that represents delay tolerance or fluctuation in data transmission.

Also, in a communication method set forth in claim 17 of the present invention, in the communication method according to claim 16, the delay quality is real time whose degree of delay tolerance is less than a first tolerance, non real time whose degree of delay tolerance is more than a second tolerance, or quasi real time whose degree of delay tolerance is in a range from the first tolerance to the second tolerance.

Also, in a communication method set forth in claim 18 of the present invention, in the communication method according to claim 16, the delay quality is real time whose delay fluctuation is less than a first fluctuation threshold, non real time whose delay fluctuation is more than a second fluctuation threshold, or quasi real time whose delay fluctuation is in a range from the first fluctuation threshold to the second fluctuation threshold.

Also, in a communication method set forth in claim 19 of the present invention, in the communication method according to claim 17 or 18, the boundary assignment controlling means executes assignment of the signals or the packets to the different times or the unit time in order of the real time, the quasi real time, and the non real time.

Also, in the communication method according to any of claims 11 to 19, a communication method set forth in claim 20 of the present invention further comprises a call-connection controlling step of controlling a connection of call to other station; and wherein, when the assignment of the signals or the packets to the different times or the unit time is to be executed at a regular time interval, the boundary assignment controlling step sets a predetermined time width or a predetermined number of unit times to the quality of service with a highest priority at a first interval of the regular time interval based on numbers of connection of call, which are connected in the call-connection controlling step.

Also, a communication program set forth in claim 21 of the present invention for causing a computer to execute the communication method set forth in any of claims 11 to 20.

Also, a computer-readable recording medium set forth in claim 22 of the present invention for recording the communication method set forth in any of claims 11 to 20 as a program that is executed by a computer.
Also, a mobile station set forth in claim 23 of the present invention has the communication equipment set forth in any of claims 1 to 10, the communication program set forth in claim 21, or the recording medium set forth in claim 22.

Also, a base station set forth in claim 24 of the present invention has the communication equipment set forth in any of claims 1 to 10, the communication program set forth in claim 21, or the recording medium set forth in claim 22.

Also, a communication system set forth in claim 25 of the present invention has the communication equipment set forth in any of claims 1 to 10, the communication program set forth in claim 21, or the recording medium set forth in claim 22.

In the communication equipment set forth in claim 1, the communication method set forth in claim 11, the communication program set forth in claim 21, the recording medium set forth in claim 22, the mobile station set forth in claim 23, the base station set forth in claim 24, and the communication system set forth in claim 25 of the present invention, the signals having different qualities of service are distributed by the discriminating means (discriminating step) every quality of service, then the signals distributed every quality of service are assigned to different times by the boundary assignment control means (boundary assignment controlling step), and then the signals are code-multiplexed by the code-multiplexing processing means (code-multiplexing processing step) every time that is assigned by the boundary assignment controlling means (boundary assignment controlling step). In this manner, the signals that are distributed every quality of service are assigned to different times. Therefore, the packets having the almost same quality of service can be assigned on the same time base, and drawbacks such as reduction in quality, etc., which are caused in the CDMA in the related art by multiplexing simultaneously the signals having different qualities of service, can be overcome, and also the guarantee of the quality of service can be achieved easily.

Also, in the communication equipment set forth in claim 2, the communication method set forth in claim 12, the communication program set forth in claim 21, the recording medium set forth in claim 22, the mobile station set forth in claim 23, the base station set forth in claim 24, and the communication system set forth in claim 25 of the present embodiment, the packets having different qualities of service are distributed to plural buffer groups that are partitioned into groups every quality of service by the discriminating means (discriminating step) based on the additional information attached to the packets, then the packets stored in a plurality of buffer groups are assigned different times the boundary assignment controlling means (boundary assignment controlling step) to pick up the packets, and then the packets that are picked up by the boundary assignment controlling means (boundary assignment controlling step) every different time are code-multiplexed by the code-multiplexing processing means (code- multiplexing processing step). In this manner, the packets having different qualities of service are distributed to plural buffer groups that are partitioned into groups every quality of service, then the packets stored in a plurality of buffer groups are assigned to different times every buffer group to pick up the packets, and then the packets are code-multiplexed every different time. Therefore, the packets having the almost same quality of service can be assigned on the same time base, and the drawbacks such as reduction in quality, etc., which are caused in the CDMA in the related art by multiplexing simultaneously the signals having different qualities of service, can be overcome, and also the guarantee of the quality of service can be achieved easily without fail.

Also, in the communication equipment set forth in claim 3, the communication method set forth in claim 13, the communication program set forth in claim 21, the recording medium set forth in claim 22, the mobile station set forth in claim 23, the base station set forth in claim 24, and the communication system set forth in claim 25 of the present embodiment, the packets having different qualities of service are distributed to K buffer groups, which are divided into groups from the first group to the K-th group (K is the integral number in excess of 2) every quality of service, by the discriminating means (discriminating step) based on the additional information attached to the packets to store in the buffers in response to the empty states of respective buffers in the buffer groups, then the looking-up of buffer is circulated through the K buffer groups by the boundary assignment controlling means (boundary assignment controlling step) every predetermined unit time to check the presence of the stored packets, then the looking-up of buffer is circulated through respective buffers of the buffer groups having the stored packet to take out the stored packet sequentially, and then the packets that are picked up by the boundary assignment controlling means (boundary assignment controlling step) every unit time are the code-multiplexed by the code-multiplexing processing means (code-multiplexing processing step).
In this manner, the packets having different qualities of service are distributed to K buffer groups that are divided into groups every quality of service, then the looking-up of buffer is circulated through the K buffer groups every predetermined unit time to check the presence of the stored packets, then the looking-up of buffer is circulated through respective buffers of the buffer groups having the stored packet to take out the stored packet sequentially, and then the packets are code-multiplexed every unit time. Therefore, the packets having the almost same quality of service can be assigned on the same time base, and the drawbacks such as reduction in quality, etc., which are caused in the CDMA in the related art by multiplexing simultaneously the signals having different qualities of service, can be overcome, and also the guarantee of the quality of service can be achieved easily.

Also, in the communication equipment set forth in claim 4, the communication method set forth in claim 14, the communication program set forth in claim 21, the recording medium set forth in claim 22, the mobile station set forth in claim 23, the base station set forth in claim 24, and the communication system set forth in claim 25 of the present embodiment, it is desired that, when the signals or the packets are to be assigned to different times or the unit time, the time width or the number of unit times every quality of service should be set in the boundary assignment controlling means (boundary assignment controlling step) so as to change with a time. Therefore, the signals or the packets having particular quality of service can be assigned preferentially in response to the restriction of the quality of service and the received states (stored amount in the buffers) of the signals or the packets, and also the guarantee of the delay quality can be achieved easily.

Also, in the communication equipment set forth in claim 5, the communication method set forth in claim 15, the communication program set forth in claim 21, the recording medium set forth in claim 22, the mobile station set forth in claim 23, the base station set forth in claim 24, and the communication system set forth in claim 25 of the present embodiment, it is desired that, in the boundary assignment controlling means (boundary assignment controlling step), the assignment of the signals or the packets to different times or the unit time should be carried out in compliance with the priority based on the quality of service of the signals or the packets. In particular, if the signals or the packets having the severe limitation of the quality of service (delay quality), e.g., the severe limitation of the delay time, are assigned preferentially, the guarantee of the quality of service (delay quality) can be achieved easily without fail.

Also, in the communication equipment set forth in claims 6, 7, 8, the communication method set forth in claims 16, 17, 18, the communication program set forth in claim 21, the recording medium set forth in claim 22, the mobile station set forth in claim 23, the base station set forth in claim 24, and the communication system set forth in claim 25 of the present embodiment, the delay quality representing the delay tolerance or the fluctuation in the data transmission is used as the quality of service. In particular, in the communication equipment set forth in claim 7 and the communication method set forth in claim 17, the delay quality is real time whose degree of delay tolerance is less than a first tolerance, non real time whose degree of delay tolerance is more than a second tolerance, or quasi real time whose degree of delay tolerance is in a range from the first tolerance to the second tolerance. Also, in particular, in the communication equipment set forth in claim 8 and the communication method set forth in claim 18, the delay quality is real time whose delay fluctuation is less than a first fluctuation threshold, non real time whose delay fluctuation is more than a second fluctuation threshold, or quasi real time whose delay fluctuation is in a range from the first fluctuation threshold to the second fluctuation threshold.

Various types of signals or packets are present, and their qualities of service such as the delay quality, etc. are different respectively. Of these, the sound data, etc. that need the real-time characteristic have the severe restriction of the delay time and also must be decoded finally at a regular interval. Therefore, the restriction of the delay fluctuation (delay jitter) is severe. Thus, if the delay quality representing the delay tolerance of the fluctuation is used as the quality of service and the packets are assigned preferentially to the signals having the severe restriction, an amount of hardware (buffer capacity, etc.) to absorb the delay fluctuation (delay jitter) can be suppressed as small as possible, and also the guarantee of the quality of service (delay quality) can be achieved easily and surely.

Also, in the communication equipment set forth in claim 9, the communication method set forth in claim 19, the communication program set forth in claim 21, the recording medium set forth in claim 22, the mobile station set forth in claim 23, the base station set forth in claim 24, and the communication system set forth in claim 25 of the present embodiment, it is desired that, in the boundary assignment controlling means (boundary assignment controlling step), the assignment of the signals or the packets to different times or the unit time should be carried out in order of real time, quasi real time, and non real time. Therefore, the sound data, etc. having the severe restriction of the quality of service (especially, the delay quality) can be assigned preferentially, and also the guarantee of the quality of service (delay quality) can be achieved easily and surely.

In addition, in the communication equipment set forth in claim 10, the communication method set forth in claim 20, the communication program set forth in claim 21, the recording medium set forth in claim 22, the mobile station set forth in claim 23, the base station set forth in claim 24, and the communication system set forth in claim 25 of the present embodiment, it is desired that the connection of call to other station should be controlled by the call-connection controlling means (call-connection controlling step), and that, when the assignment of the signals or the packets to the different times or the unit time is to be executed at a regular time interval, the boundary assignment controlling means should set a predetermined time width or a predetermined number of unit times to the quality of service with a highest priority at a first interval of the regular time interval based on numbers of connection of call, which are connected by the call-connection controlling means. For example, if the highest priority is allocated to the signal or the packet having the severe restriction of the quality of service (delay quality), the signal or the packet can be output at the substantially regular time interval and thus the delay fluctuation (delay jitter) can be almost eliminated.

### <Brief Description of the Drawings>

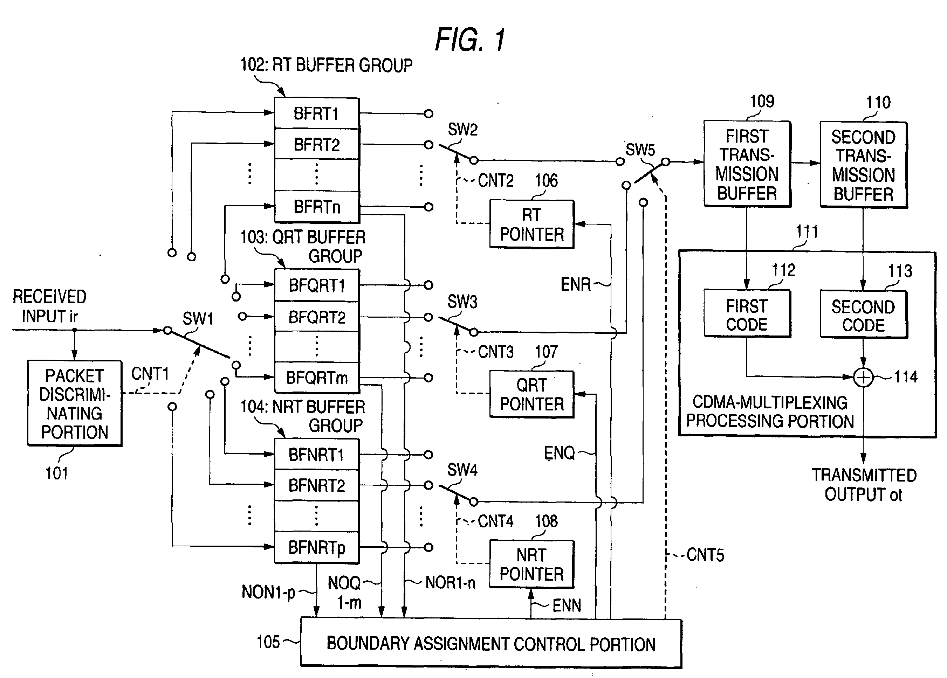

FIG.1 is a configurative view of a signal-assignment executing portion in a communication equipment (base station) according to an embodiment of the present invention.

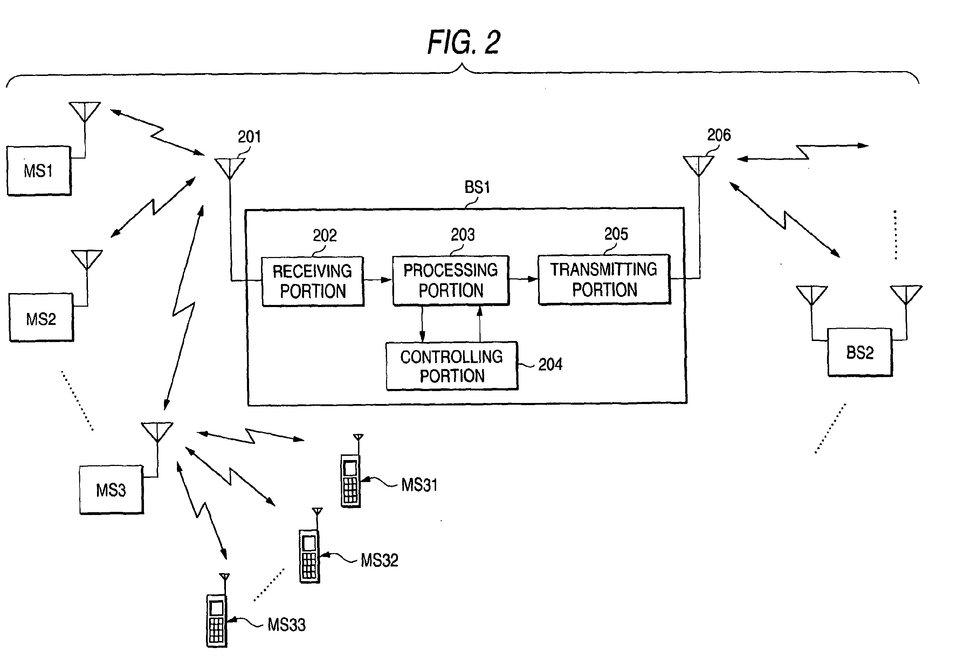

FIG.2 is a configurative view of a communication system to which the communication equipment (base station) according to the present embodiment is applied.

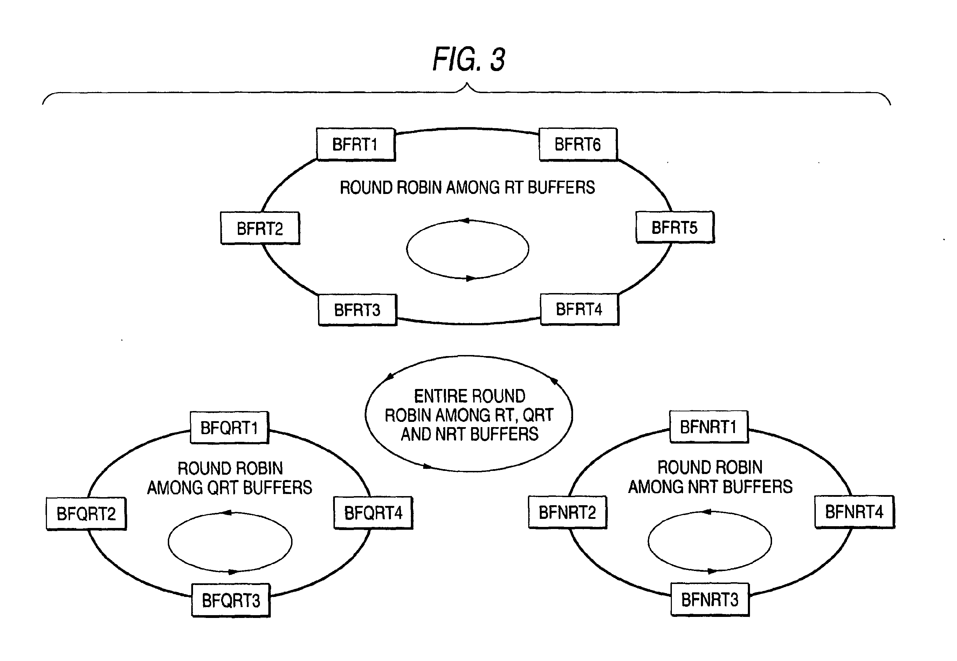

FIG.3 is an explanatory view explaining an outline of a signal assigning method (buffer assigning method) in the present embodiment.

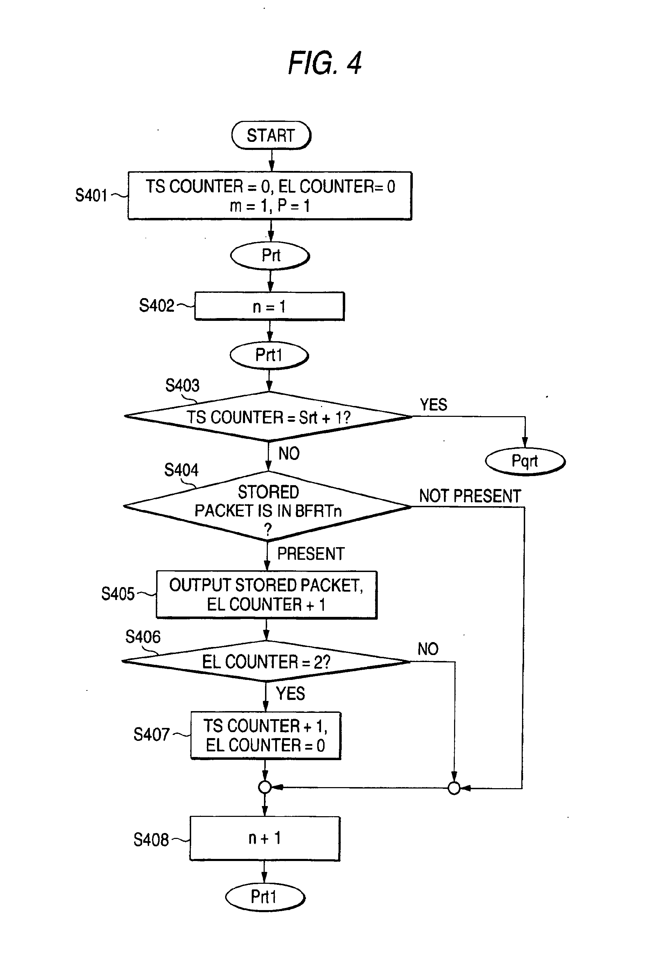

FIG.4 is a flowchart explaining mainly a lower round robin among real-time RT buffer group.

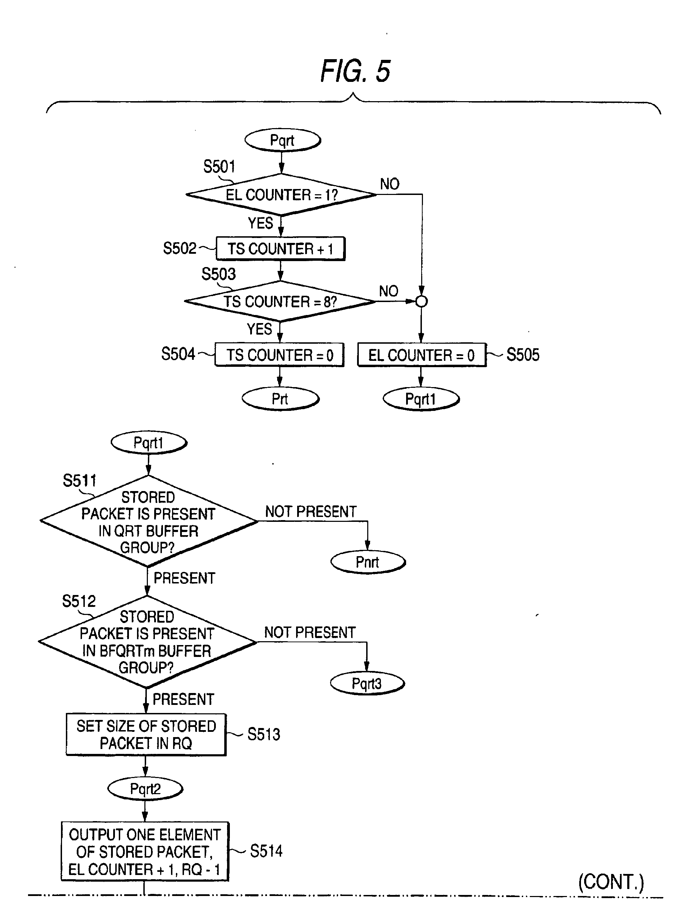

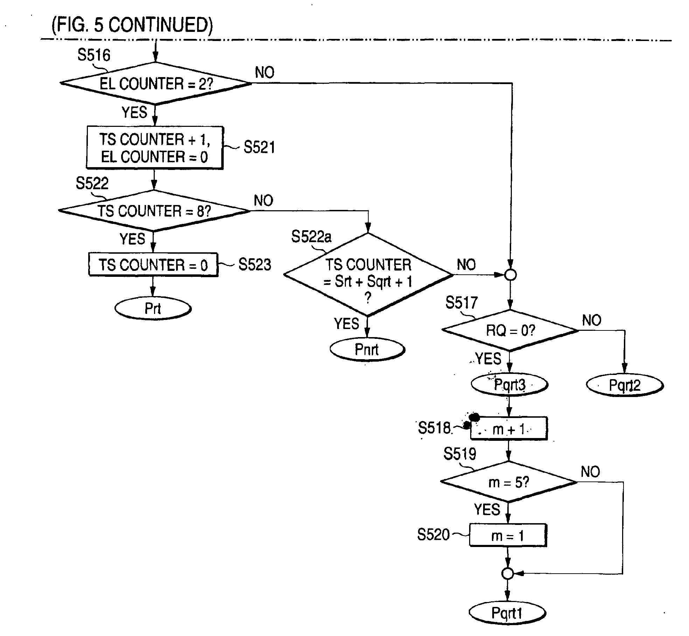

FIG.5 is a flowchart explaining mainly a lower round robin among quasi real-time QRT buffer group.

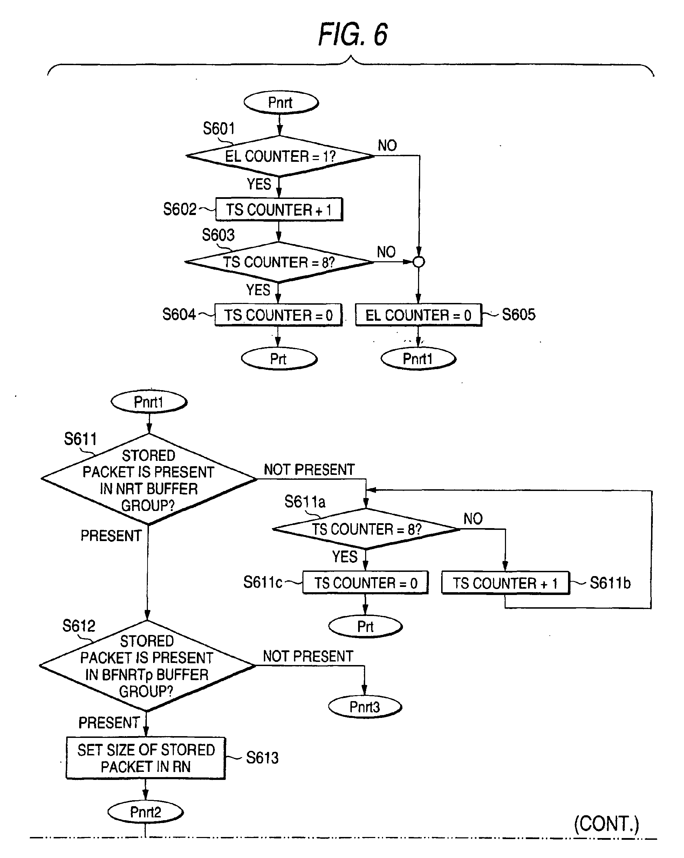

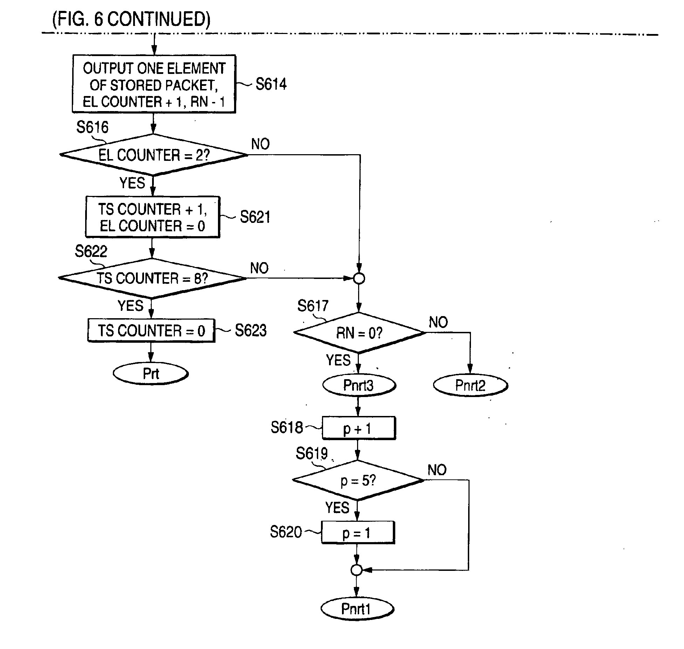

FIG.6 is a flowchart explaining mainly a lower round robin among non real-time QRT buffer group.

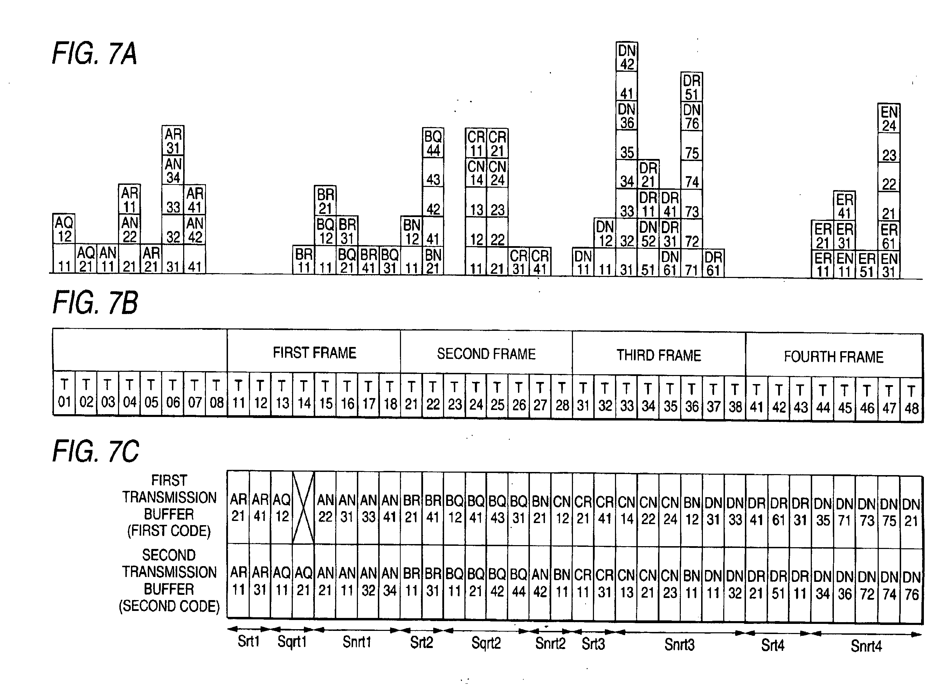

FIGs.7A, 7B, and 7C are time charts showing which transmitted outputs can be obtained in response to particular received inputs (packet input group) in the present embodiment.

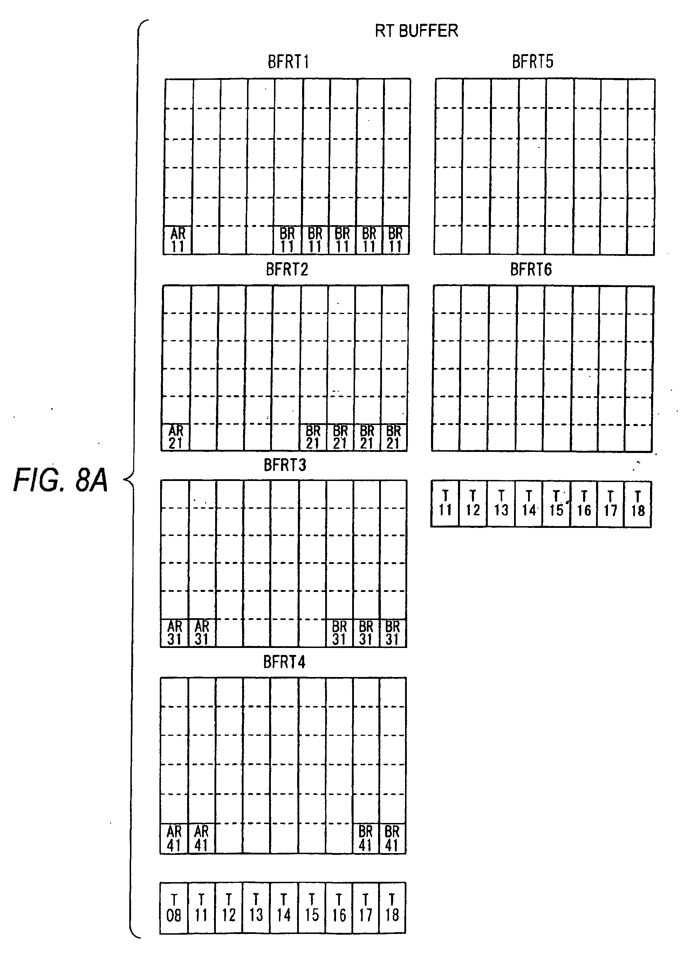

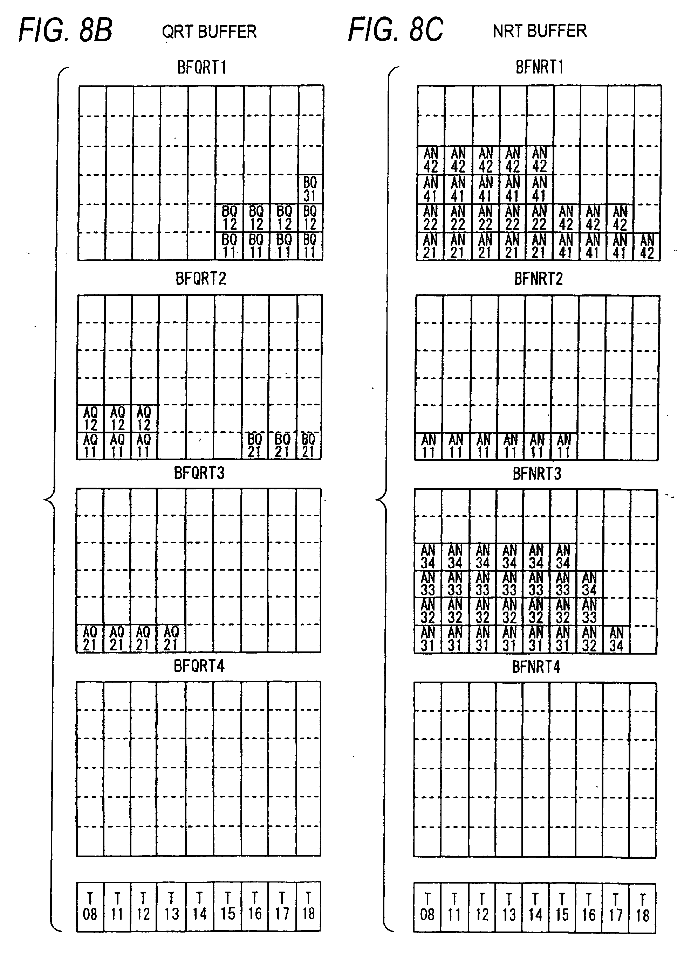

FIGs.8A, 8B, and 8C are explanatory views explaining stored states of packets in respective buffers in a first frame output period (time slots T11 to T18) in the present embodiment.

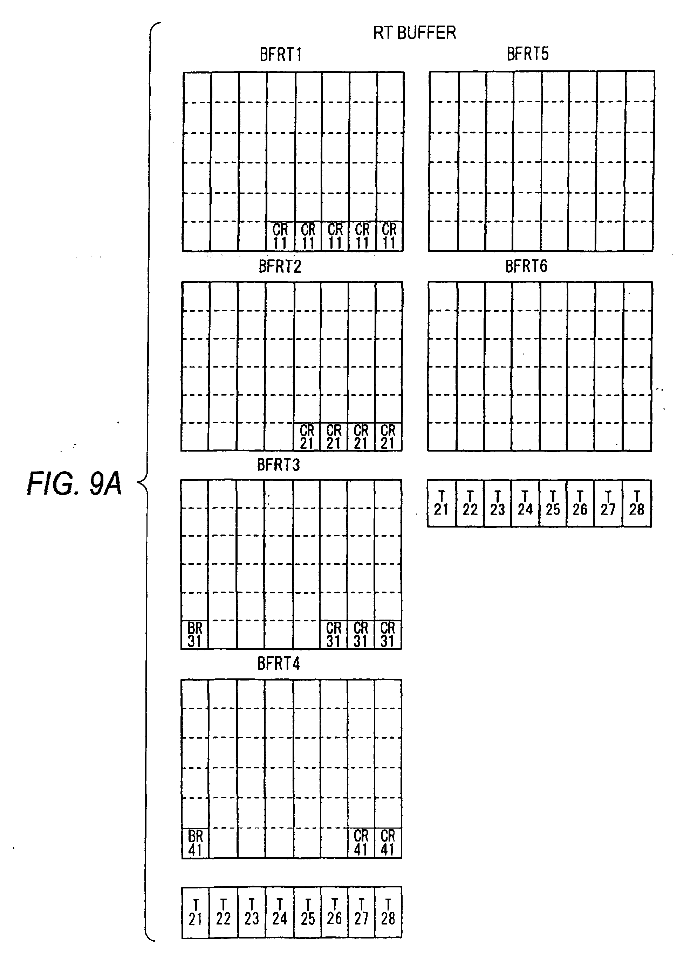

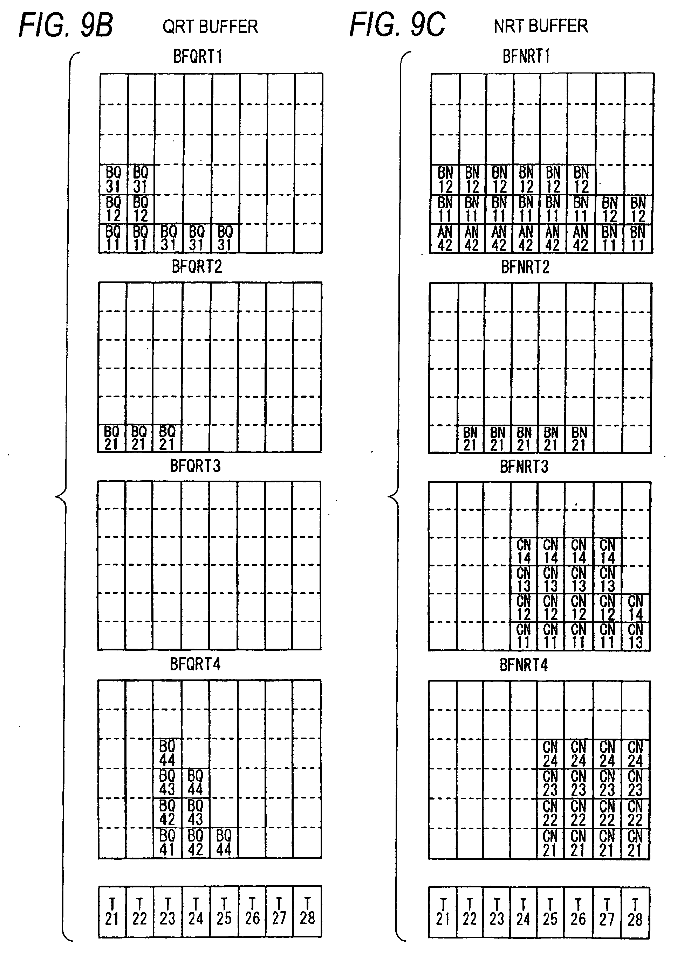

FIGs.9A, 9B, and 9C are explanatory views explaining stored states of packets in respective buffers in a second frame output period (time slots T21 to T28) in the present embodiment.

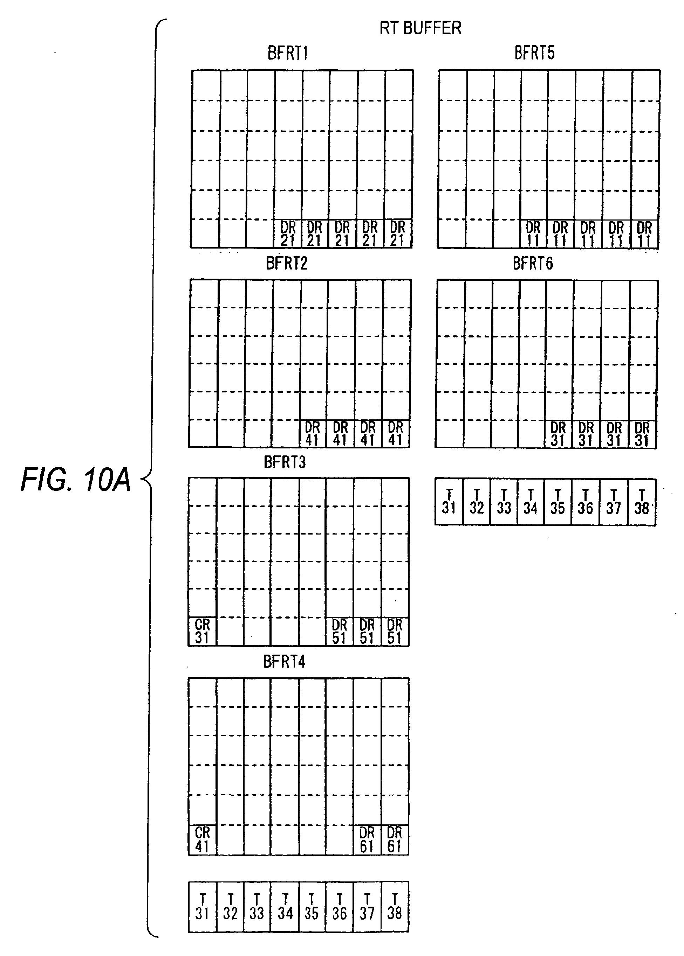

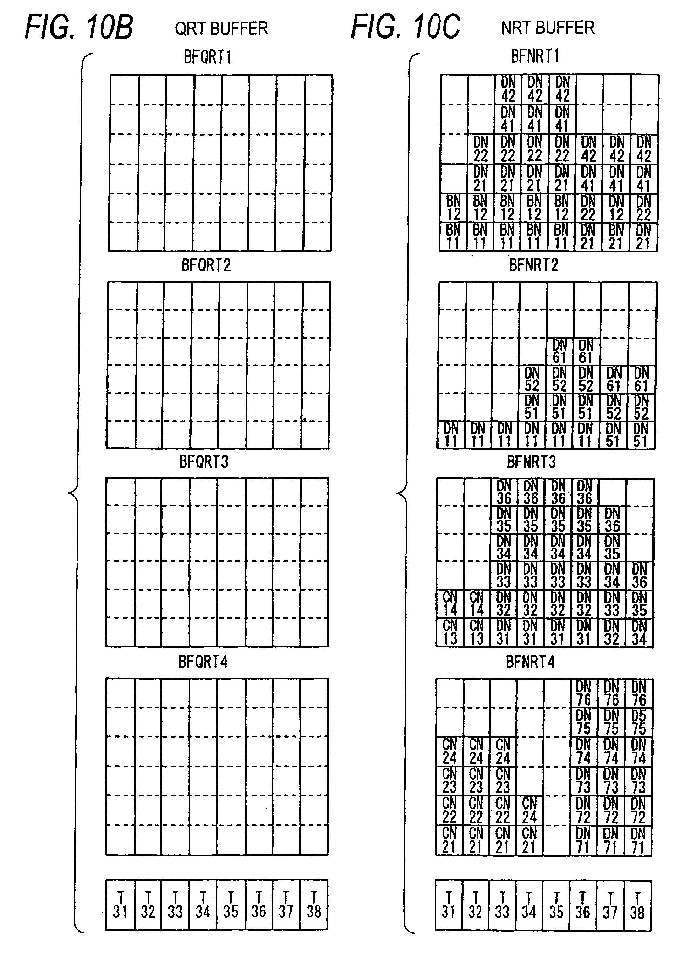

FIGs.10A, 10B, and 10C are explanatory views explaining stored states of packets in respective buffers in a third frame output period (time slots T31 to T38) in the present embodiment.

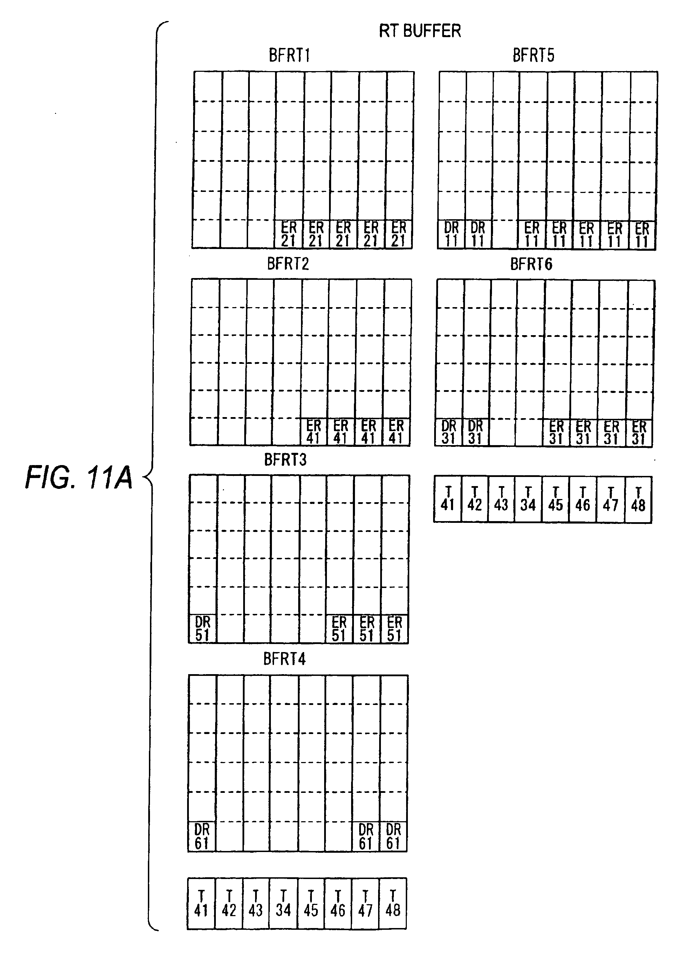

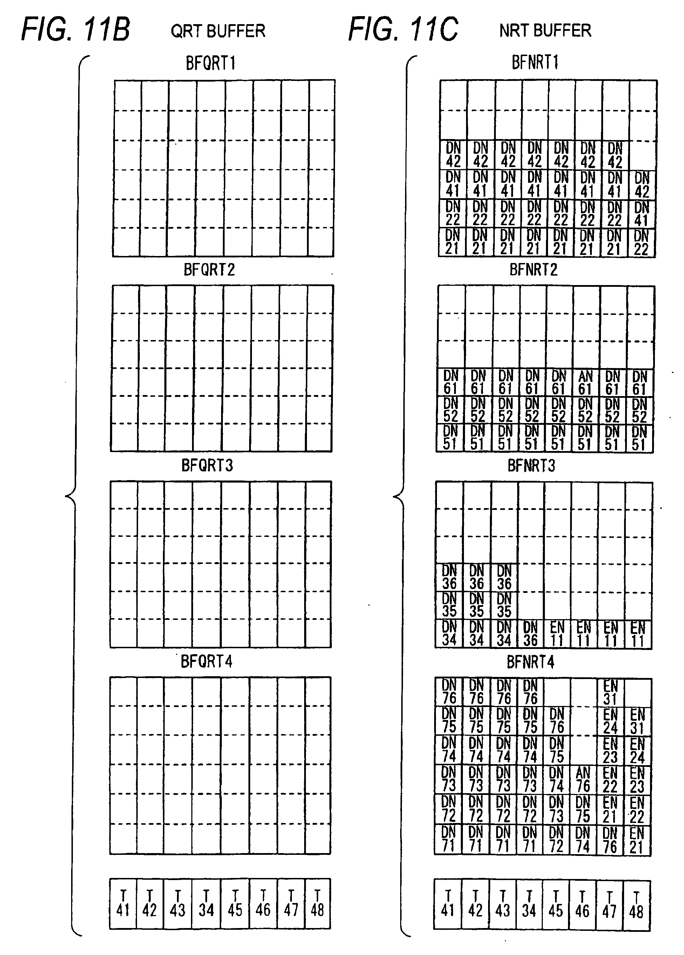

FIGs.11A, 11B, and 11C are explanatory views explaining stored states of packets in respective buffers in a fourth frame output period (time slots T41 to T48) in the present embodiment.

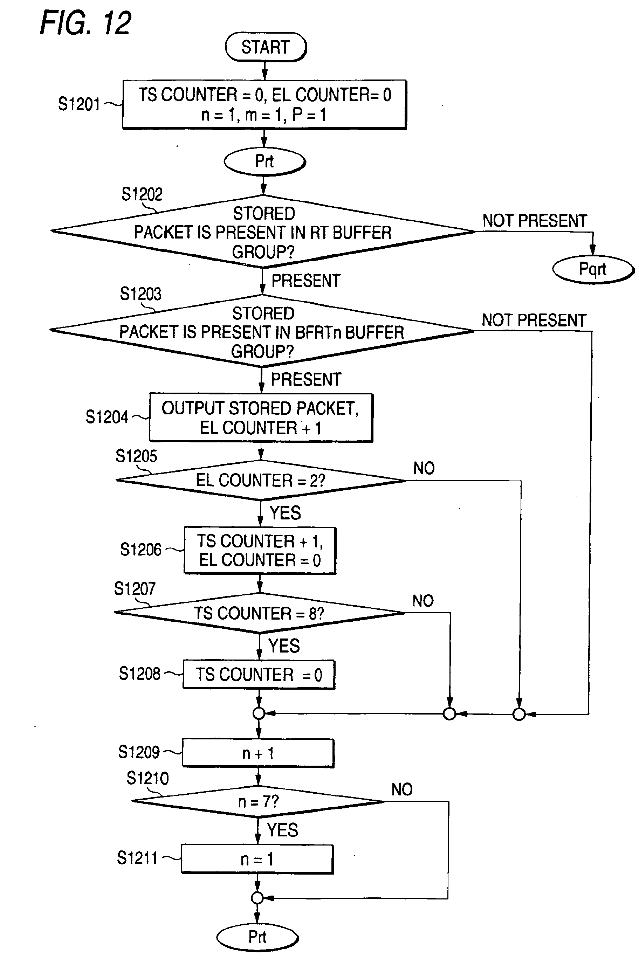

FIG.12 is a flowchart explaining mainly a lower round robin among real-time RT buffer groups according to a variation.
FIG.13 is a configurative view of a signal-assignment executing portion in a communication equipment (base station) in the related art.
FIG.14 is an explanatory view explaining an outline of a communication method (assigning method of down signals) in the related art.
FIGs.15A, 15B, and 15C are time charts showing which transmitted outputs can be obtained in response to particular received inputs (packet input group) in the related art.
FIGS.16A, 16B, and 16C are explanatory views explaining stored states of packets in respective buffers in the first frame output period (time slots T11 to T18) in the related art.
FIGs.17A, 17B, and 17C are explanatory views explaining stored states of packets in respective buffers in the second frame output period (time slots T21 to T28) in the related art.
FIGs.18A, 18B, and 18C are explanatory views explaining stored states of packets in respective buffers in the third frame output period (time slots T31 to T38) in the related art.
FIGs.19A, 19B, and 19C are explanatory views explaining stored states of packets in respective buffers in the fourth frame output period (time slots T41 to T48) in the related art.

In Figures, a reference 101 is a packet discriminating portion (discriminating means), 102(BFRT1 to BFRTn) are real-time RT buffer group, 103(BFQRT1 to BFQRTm) are quasi real-time QRT buffer group, 104(BFNRT1 to BFNRTp) are non real-time NRT buffer group, 105 is a boundary assignment control portion (boundary assignment controlling means), 905 is an assignment control portion, 106 is an RT pointer, 107 is a QRT pointer, 108 is an NRT pointer, 109 is a first transmission buffer, 110 is a second transmission buffer, 111 is a CDMA-multiplexing processing portion, 112 is a first code, 113 is a second code, 114 is an adder, SW1 to SW7 are switches, ir is a received input, ot is a transmitted output, CNT1 to CNT7 are control signals, NOR, NOQ, NON are status information, ENR, ENQ, ENN are enable signals, BS1, BS2 are base stations, MS1 to MS3 are mobile stations, MS31 to MS33 are child stations of the mobile station MS3, 201, 206 are antennas, 202 is a receiving portion, 203 is a processing portion, 204 is a controlling portion, and 205 is a transmitting portion.

### <Best Modes for Carrying Out the Invention>

Embodiments of a communication equipment, a communication method, a communication program, a recording medium, a mobile station, a base station, and a communication system according to the present invention will be explained in detail with reference to the drawings hereinafter. Here, the communication equipment and the communication method according to the present invention will be described in detail in explanation of respective embodiments. In this case, since the communication program according to the present invention is a program used to execute the communication method and also the recording medium according to the present invention is a recording medium for recording the program to execute the communication method, it should be interpreted that their explanations are contained in the following explanation of the communication method.

FIG.1 is a configurative view of a communication equipment according to an embodiment of the present invention. In FIG.1, same symbols are affixed to portions that are overlapped with those in FIG.13 (the related art).

The communication equipment according to the present embodiment is applied to a base station BS1 in a configuration of a communication system shown in FIG.2. That is, in FIG.2, the communication system comprises at least base stations BS1, BS2, mobile stations MS1 to MS3, and child stations MS31 to MS33 of the mobile station MS3. In such communication system, the base station BS1 executes the radio relay between the mobile stations MS1 to MS3 and other base station BS2, etc.

Here, as the service provided by the communication system in which the communication equipment (base station BS1) according to the present embodiment is contained, there are voice call, Internet access, transmission/reception of the electronic mail, etc. As the delay qualities (qualities of service), the data communication such as the voice call, etc., the delay tolerance of which is small, corresponds to the real-time RT communication, the data communication such as Internet response, etc., which a relatively high responsibility is required of, corresponds to the quasi real-time QRT communication, and the data communication such as the electronic mail, etc., the delay tolerance of which is relatively large, corresponds to the non real-time NRT communication.

Also, a schematic configuration of the base station BS1 is also shown in FIG.2. The base station BS1 comprises antennas 201, 206, a receiving portion 202, a processing portion 203, a controlling portion 204, and a transmitting portion 205. A portion for executing the signal assignment of up signals and down signals, as the feature of the present embodiment, is implemented by the processing portion 203 and the controlling portion (CPU) 204.

Again, returning to FIG.1, as the constituent portion for executing the signal assignment of up signals and down signals, the communication equipment (base station BS1) according to the present embodiment comprises a packet discriminating portion 101, an RT buffer group 102 (BFRT1 to BFRTn), a QRT buffer group 103 (BFQRT1 to BFQRTm), an NRT buffer group 104 (BFNRT1 to BFNRTp), a boundary assignment control portion 105, an RT pointer 106, a QRT pointer 107, an NRT pointer 108, a first transmission buffer 109, a second transmission buffer 110, a CDMA-multiplexing processing portion 111, and switches SW1 to SW5.

Here, the buffers of the present embodiment are partitioned into three buffer groups, i.e., real-time RT buffer group 102, quasi real-time QRT buffer group 103, and non real-time NRT buffer group 104, every delay quality (quality of service). In this case, explanation will be given under the assumption that n, m, p in the reference symbols of the buffer groups are set to n=6, m=4, p=4 and the real-time RT buffer group 102 has BFRT1 to BFRT6, the quasi real-time QRT buffer group 103 has BFQRT1 to BFQRT4, and the non real-time NRT buffer group 104 has BFNRT1 to BFNRT4.

Also, the packet discriminating portion 101 discriminates delay qualities (real-time RT, quasi real-time QRT, and non real-time NRT) based on additional information (header) attached to the packets of the received input ir, then distributes the packets to the real-time RT buffer group 102, the quasi real-time QRT buffer group 103, and the non real-time NRT buffer group 104 in response to the discrimination result respectively, and then stores the packets in respective buffers (BFRT1 to BFRT6, BFQRT1 to BFQRT4, and BFNRT1 to BFNRT4) in respective buffer groups according to their empty states and the types of the packets. More particularly, the route for the predetermined buffer is established by switching the switch SW1 according to the control signal CNT1.

As the construction methods of the switches SW1 to SW5, for example, there are the method of inserting an inhibit gate (2-input AND gate) into each signal route and supplying the control signal to the other input terminal of the inhibit gate, the method of making the signal route effective by setting the control signal to an enable ("H" level), the method of inserting a transfer gate transistor into each signal route and then turning the transistor into its ON state by the control signal to make the signal route effective, etc.

Then, the boundary assignment control portion 105 is constructed in the control portion (CPU) 204, and checks the presence of the stored packets in respective buffers based on status information NOR1 to NOR6 from the real-time RT buffer group 102 (BFRT1 to BFRT6), status information NOQ1 to NOQ4 from the quasi real-time QRT buffer group 103 (BFQRT1 to BFQRT4), and status information NON1 to NON4 from the non real-time NRT buffer group 104 (BFNRT1 to BFNRT4). Also, the boundary assignment control portion 105 makes effective one of an enable signal ENR for the RT pointer 106, an enable signal ENQ for the QRT pointer 107, and an enable signal ENN for the NRT pointer 108, and also establishes the route for the first transmission buffer 109 by switching the switch SW5 based on the control signal CNT5. In this case, the switches SW2, SW3, SW4 are constructed such that they are switched by the control signal CNT2 from the RT pointer 106, the control signal CNT3 from the QRT pointer 107, and the control signal CNT4 from the NRT pointer 108 respectively.

The procedures of assigning the buffers and taking out the stored packets sequentially by switching the switches SW2, SW3, SW4 and the switch SW5 correspond to the signal assignment of up signals or down signals. FIG.3 is an explanatory view explaining an outline of a signal assigning method, i.e., a buffer assigning method of the present embodiment.

As shown in FIG.3, in this outline of the buffer assigning method of the present embodiment, a hierarchical round robin approach is applied. First, a higher round robin is executed among the real-time RT buffer group 102, the quasi real-time QRT buffer group 103, and the non real-time NRT buffer group 104 in compliance with their priorities to assign the buffer groups. Then, a lower round robin is executed among assigned buffer groups (real-time RT buffer group BFRT1 to BFRT6, quasi real-time QRT buffer group BFQRT1 to BFQRT4, or non real-time NRT buffer group BFNRT1 to BFNRT4) to assign the buffers.

The execution of the higher round robin among the real-time RT buffer group 102, the quasi real-time QRT buffer group 103, and the non real-time NRT buffer group 104 is the switching of the switch SW5 based on the control signal CNT5. Also, the lower round robin among the real-time RT buffer group BFRT1 to BFRT6 is executed by switching the switch SW2 based on the control signal CNT2, the lower round robin among the quasi real-time QRT buffer group BFQRT1 to BFQRT4 is executed by switching the switch SW3 based on the control signal CNT3, and the lower round robin among the non real-time NRT buffer group BFNRT1 to BFNRT4 is executed by switching the switch SW4 based on the control signal CNT4.

Also, the first transmission buffer 109 and the second transmission buffer 110 are two transmission buffers that are prepared since the number of multiplexing codes in CDMA is set to 2. Respective outputs are diffused as a first code 112 and a second code 113 in the CDMA-multiplexing processing portion 111, and then multiplexed by an adder 114 to get the transmitted output ot. Here, these configurations correspond to a code-multiplexing processing means set forth in claims.

Next, the signal assigning method of up signals or down signals, i.e., the buffer assigning method, as the communication method in the communication equipment of the present embodiment will be explained in detail with reference to FIG.4, FIG.5 and FIG.6 hereunder. FIG.4, FIG.5 and FIG.6 are flowcharts explaining mainly the lower round robin approaches among the real-time RT buffer group BFRT1 to BFRT6, the quasi real-time QRT buffer group BFQRT1 to BFQRT4, and the non real-time QRT buffer group BFNRT1 to BFNRT4 respectively. In the following explanation, explanation will be made under the assumption that the transmitted output ot has the number of multiplexed codes=2 and 8 slots/one frame.
In this case, the higher round robin among the real-time RT buffer group 102, the quasi real-time QRT buffer group 103, and the non real-time NRT buffer group 104 is implemented by the branch to Pqrt (step S501) in FIG.5 executed when a TS counter=Srt+1 is satisfied in step S403 in FIG.4, the branch to Pnrt (step S601) in FIG.6 executed when no stored packet is present in the QRT buffer group 103 in step S511 in FIG.5, and the branch to Prt (step S403) in FIG.4 executed when no stored packet is present in the NRT buffer group 104 in step S611 in FIG.6.

Here, in steps S611a, S611b, S611c in FIG.6, when no stored packet is present in the NRT buffer group 104, the branch to Prt (step S403) is stopped until the time slots per one frame are ended (until the TS counter=8 is obtained). This procedure is executed such that the time slot of the first Srt in each frame can always be set to the RT packet. Accordingly, the RT packet can be sent out at a constant time interval.
First, in FIG.4, various parameters are initialized in steps S401, S402. Where the TS counter denotes the time slot in one frame and has integral numbers from 0 (initial value) to 8. Also, the EL counter denotes any of the first code 112 and the second code 113 in the code multiplexing and has integral numbers from 0 (initial value) to 2. Also, n, m, p denote the buffer number (numerical value of the last one digit of the reference symbol) of the real-time RT buffer group BFRT1 to BFRT6, the quasi real-time QRT buffer group BFQRT1 to BFQRT4, and the non real-time QRT buffer group BFNRT1 to BFNRT4 respectively.

Then, in step S403, it is checked whether or not TS counter=Srt+1. Where Srt is the number of time slots allocated to the RT packets in the current frame. This Srt is decided based on the connected number of calls that are connected currently by a call-connection control portion that controls the connection of calls to other stations, and is the minimum integral number that exceeds the numerical value obtained by dividing the connected number of calls by the number of multiplexed codes. Since the number of multiplexed codes=2, Srt=2 when the connected number of calls is 3 or 4, and Srt=3 when the connected number of calls is 5 or 6, for example. In this case, the call-connection control portion is installed in the control portion (CPU) 204 in FIG.2.

In this manner, since it is checked in step S403 that the TS counter indicating the time slot position is less than the number of time slots assigned to the RT packet, the first Srt time slots in the frame can be preferentially assigned to the RT packet.
In step S403, if TS counter=Srt+1 is not satisfied (the time slot is for the RT packet), the process goes to step S404 and enter into the lower round robin among the real-time RT buffer group BFRT1 to BFRT6. If TS counter=Srt+1 is satisfied (the time slot is not for the RT packet), the process goes to Pqrt (step S501) in FIG.5.

Then, in step S404, it is checked whether or not the stored packet is present in the n-th RT buffer BFRTn (n=1 to 6). If the stored packet is present, the process goes to step S405 where the stored packet is output and the EL counter is incremented. In this case, the switch SW5 is changed to be connected to the switch SW2 at a point of time when the process goes to step S404, and the switch SW2 is changed to be connected to the connection to the n-th RT buffer BFRTn by the control signal CNT2 from the RT pointer 106 at a point of time when the process goes to step S405, whereby the stored packet is output to the first transmission buffer 109. Accordingly, the RT pointer 106 corresponds to the parameter n in this flowchart.

Then, in step S406, it is checked whether or not the EL counter=2 is satisfied. If the EL counter=2 is satisfied, the process goes to step S407 where the TS counter is incremented to set the time slot to the subsequent time slot and the EL counter is reset to the initial value (0). Also, if the EL counter=2 is not satisfied, or after the process in step S407 is completed, or if no stored packet is present in the n-th RT buffer BFRTn (n=1 to 6) in step S404, the process goes to step S408 where the parameter n is incremented. Then, the process goes back to step S403.

Next, in FIG.5, steps S501 to S505 are pre-process executed before the process enters into the lower round robin among the quasi real-time QRT buffer group BFQRT1 to BFQRT4. According to the signal assignment method of the present embodiment, since the packet is set to any of the RT packet, the QRT packet, and the NRT packet every time slot, there is the case where only one element of the packet is assigned to one time slot according to the situation of the stored packet.

In this case (when the EL counter=1 in step S501), the process should inter into the lower round robin among the quasi real-time QRT buffer group BFQRT1 to BFQRT4 (step S512) after the TS counter is incremented to set the time slot to the subsequent time slot in step S502, then it is checked in step S503 that the incremented TS counter is not "8", and then the EL counter is reset to the initial value (0) in step S505. In this case, if the TS counter=8 in step S503, this means that the assignment of the current frame is ended. Therefore, the TS counter is reset to the initial value (0) in step S504, and then the process goes to Prt (step S403) in FIG.4 to repeat the hierarchical round robin.
Then, in step S511, it is checked whether or not the stored packet is present in the QRT buffer group 103. If the stored packet is present, the process goes to step S512 where the process inters into the lower round robin among the quasi real-time QRT buffer group BFQRT1 to BFQRT4. If the stored packet is not present, the process goes to Pnrt (step S601) in FIG.6.
Then, in step S512, it is checked whether or not the stored packet is present in the m-th QRT buffer BFQRTm (m=1 to 4). If the stored packet is present, the process goes to step S513 where a size of the stored packet (the number of elements which the QRT packet has) is set in the parameter RQ. Then, in step S514, one element of the stored packet is output on the basis of FIFO (First-In First-Out), the EL counter is incremented, and the RQ counter is decremented.

In this case, the switch SW5 is changed to be connected to the switch SW3 at a point of time when the process goes to step S512, and the switch SW3 is changed to be connected to the m-th QRT buffer BFQRTm based on the control signal CNT3 from the QRT pointer 107 at a point of time when the process goes to step S513, whereby one element of the stored packet is output to the first transmission buffer 109. Accordingly, the QRT pointer 107 corresponds to the parameter m in this flowchart.

Then, in step S516, it is checked whether or not the EL counter=2 is satisfied. If the EL counter=2 is satisfied, the process goes to step S521 where the TS counter is incremented to set the time slot to the subsequent time slot and the EL counter is reset to the initial value (0). Then, if it is checked in step S522 that the incremented TS counter is not "8" or if the EL counter=2 is not satisfied in step S516, the process goes to step S517. In this case, it is indicated that, if the TS counter=8 is satisfied in step S522, the assignment of the current frame is completed. Therefore, in step S523, the TS counter is reset to the initial value (0), and then the process goes to Prt (step S403) in FIG.4 to repeat the hierarchical round robin.

Also, if the incremented TS counter is not "8" in step S522, it is decided in step S522a whether or not the TS counter exceeds Srt+Sqrt. If the TS counter is in excess of Srt+Sqrt, the process goes to Pnrt (step S601) in FIG.6. As a consequence, while executing the QRT packet rather than the NRT packet, a degree of priority can be restricted by limiting the time slots, which are allocated to the transmission of the QRT packet, to Sqrt.

Then, in step S517, it is checked whether or not the parameter RQ=0 is satisfied. If RQ=0 is satisfied, all elements of the QRT packet that are to be assigned to the m-th QRT buffer BFQRTm are output. Therefore, the process goes to step S518 where the parameter m is incremented. In step S519, it is checked that m=5 is not satisfied, and then the process returns to step S511 where the lower round robin among the quasi real-time QRT buffer group BFQRT1 to BFQRT4 is advanced. In this case, if m=5 is satisfied in step S519, the value must be returned to m=1 in step S520. Also, if the parameter RQ=0 is not satisfied in step S517, elements that have not been output yet still remain in the QRT packet that is to be assigned to the m-th QRT buffer BFQRTm. Therefore, the process goes back to step S514 and then remaining elements are output.

In the buffer assigning method of the present embodiment, since the first Srt time slots in the frame are assigned preferentially to the RT packet, sometimes the process goes to Prt (step S403) in FIG.4 and is shifted to the next frame while the elements that have not been output yet still remain in the QRT packet that is to be assigned to the m-th QRT buffer BFQRTm. In this case, the information indicating from which element of the stored packet of the QRT buffer the process must be started when the process is moved to the lower round robin among the quasi real-time QRT buffer group BFQRT1 to BFQRT4 of the next frame can be held by the parameters m, RQ.

Next, in FIG.6, steps S601 to S605 are the pre-process executed before the process enters into the lower round robin among the non real-time NRT buffer group BFNRT1 to BFNRT4. In the processes in FIG.5, if only one element of the packet is assigned to one time slot (if the EL counter=1 in step S601), the TS counter is incremented to set the time slot to the subsequent time slot in step S602, then it is checked that the incremented TS counter is not "8" in step S603, the EL counter is reset to the initial value (0) in step S605, and then the process enters into the lower round robin among the non real-time NRT buffer group BFNRT1 to BFNRT4 (step S612). In this case, when the TS counter=8 is satisfied in step S603, which means that the assignment of the current frame is ended. Therefore, the TS counter is reset to the initial value (0) in step S604, and then the process goes to Prt (step S403) in FIG.4 to repeat the hierarchical round robin.

Then, in step S611, it is checked whether or not the stored packet is present in the NRT buffer group 104. If the stored packet is present, the process goes to step S612 where the process enters into the lower round robin among the non real-time NRT buffer group BFNRT1 to BFNRT4 and then the process goes to Prt (step S403) in FIG.4.

Then, in step S612, it is checked whether or not the stored packet is present in the p-th NRT buffer group BFNRTp (p=1 to 4). If the stored packet is present, the process goes to step S613 where a size of the stored packet (the number of elements which the NRT packet has) is set in the parameter RN. Then, in step S614, one element of the stored packet is output on the basis of FIFO (First-In First-Out), then the EL counter is incremented, and then the parameter RN is decremented.

In this case, the switch SW5 is changed to be connected to the switch SW4 at a point of time when the process goes to step S612, and the switch SW4 is changed to be connected to the p-th NRT buffer BFNRTp based on the control signal CNT4 from the NRT pointer 108 at a point of time when the process goes to step S613, whereby one element of the stored packet is output to the first transmission buffer 109. Accordingly, the NRT pointer 108 corresponds to the parameter p in this flowchart.

Then, in step S616, it is checked whether or not the EL counter=2 is satisfied. If the EL counter=2 is satisfied, the process goes to step S621 where the TS counter is incremented to set the time slot to the subsequent time slot and the EL counter is reset to the initial value (0). Then, if it is checked in step S622 that the incremented TS counter is not "8" or if the EL counter=2 is not satisfied in step S616, the process goes to step S617. In this case, it is indicated that, if the TS counter=8 is satisfied in step S622, the assignment of the current frame is completed. Therefore, in step S623, the TS counter is reset to the initial value (0), and then the process goes to Prt (step S403) in FIG.4 to repeat the hierarchical round robin.

Then, in step S617, it is checked whether or not the parameter RN=0 is satisfied. If RN=0 is satisfied, all elements of the NRT packet that are to be assigned to the p-th NRT buffer BFNRTp are output. Therefore, the process goes to step S618 where the parameter p is incremented. In step S619, it is checked that p=5 is not satisfied, and then the process returns to step S611 where the lower round robin among the non real-time NRT buffer group BFNRT1 to BFNRT4 is proceeded. In this case, if p=5 is satisfied in step S619, the value must be returned to p=1 in step S620.

Also, if the parameter RN=0 is not satisfied in step S617, elements that have not been output yet still remain in the NRT packet that is to be assigned to the p-th NRT buffer BFQRTp. Therefore, the process goes back to step S614 and then remaining elements are output. In some cases, the process goes to Prt (step S403) in FIG.4 and is moved to the next frame while the elements that have not been output yet still remain in the NRT packet that is to be assigned to the p-th NRT buffer BFQRTp. In this case, the information indicating from which element of the stored packet of the QRT buffer the process must be started when the process is moved to the lower round robin among the non real-time NRT buffer group BFNRT1 to BFNRT4 of the next frame can be held by the parameters p, RN.

Next, the communication method in the communication equipment according to the present embodiment will be explained further with reference to FIG.7A to FIG.11C hereunder. Here, explanation concerning which transmitted output can be obtained in response to particular received inputs (packet input group) will be made with reference to the transition of the stored states of the packets in respective buffers BFRT1 to BFRT6, BFQRT1 to BFQRT4, and BFNRT1 to BFNRT4. In this case, as shown in FIG.7B, a time base will be explained by using respective time slots of the output frame, i.e., time slots T01 to T08 in the pre-output period, time slots T11 to T18 in the first frame output period, time slots T21 to T28 in the second frame output period, time slots T31 to T38 in the third frame output period, and time slots T41 to T48 in the fourth frame output period.

FIG.7A shows packet groups of the received inputs ir in respective time slots, which are similar to those used in explanation in the related art. FIG.7C shows contents of the first transmission buffer 109 and the second transmission buffer 110 in respective time slots from the first frame to the fourth frame, i.e., contents of the first code 112 and the second code 113, which are to be multiplexed. In this case, in FIG.7C, Srt1 to Srt4, Sqrt1, Sqrt2, Snrt1 to Snrt4 are the numbers of time slots (time intervals) assigned to the RT packet, the QRT packet, and the NRT packet in the first frame to the fourth frame respectively.

FIGs.8A, 8B, and 8C show the transition of the stored packets in respective buffers in the first frame output period (time slots T11 to T18), wherein the time slots T08 in the pre-output period is added only to the RT buffers BFRT1 to BFRT4. In the hierarchical round robin approach according to the present embodiment, the looking-up of buffer groups by the higher round robin is started from the RT buffer group 102, and the looking-up of buffers by the lower round robin in the RT buffer group 102 is started from the first RT buffer BFRT1. In the time slot T08, the RT packet AR11 and the RT packet AR21 are output sequentially from the first RT buffer BFRT1 and the second RT buffer BFRT2, and then these packets are multiplexed in the time slot T11 and are transmitted/ output.

If attention will be paid only to the buffer outputs similarly in the following, the RT packet AR31 and the RT packet AR41 are output sequentially from the RT buffer BFRT3 and the RT buffer BFRT4 in the time slot T11. Then, the process moves to the QRT buffer group 103 by the higher round robin in the time slot T12, then the looking-up of the buffer reaches the second QRT buffer BFQRT2 based on the lower round robin in the QRT buffer group 103, and then QRT packets AQ11, AQ12 are output sequentially from this buffer. Then, the QRT packet AQ21 is output from the third QRT buffer BFQRT3 in the time slot T13. In this case, since the stored buffer is not present in the QRT buffer group 103 at this point of time, the process moves to the NRT buffer BFNRT1 based on the higher round robin.

Then, the lower round robin in the NRT buffer group 104 is started. Then, the NRT packets AN21, AN22 are output sequentially from the first NRT buffer BFNRT1 in the time slot T14. Then, the NRT packet AN11 and the NRT packet AN31 are output sequentially from the second NRT buffer BFNRT2 and the third NRT buffer BFNRT3 in the time slot T15 respectively. Also, the NRT packets AN32, AN33 are output sequentially from the third NRT buffer BFNRT3 in the time slot T16. In addition, after the NRT packets AN34 is output from the third NRT buffer BFNRT3 in the time slot T17, the looking-up of the buffer arrives at the first NRT buffer BFNRT1 based on the lower round robin in the NRT buffer group 104, and then the NRT packet AN41 is output sequentially from this buffer.

Further, the looking-up of buffer is returned to the RT buffer group 102 based on the higher round robin in the time slot T18, and the RT packet BR11 and the RT packet BR21 are output sequentially from the first RT buffer BFRT1 and the second RT buffer BFRT2 respectively.

Then, similarly in FIGs.9A, 9B and 9C (for the sake of simplicity, their names are omitted), BR31, BR41 are output sequentially from BFRT1, BFRT2 in T21 respectively, then BQ11, BQ12 are output sequentially from BFQRT1 in T22 respectively, then BQ21, BQ41 are output sequentially from BFQRT2, BFQRT4 in T23 respectively, then BQ42, BQ43 are output sequentially from BFQRT4 in T24 respectively, then BQ44, BQ31 are output sequentially from BFQRT4, BFQRT1 in T25 respectively, then AN42, BN21 are output sequentially from BFNRT1, BFNRT2 in T26 respectively, then CN11, CN12 are output sequentially from BFNRT3 in T27 respectively, and then CR11, CR21 are output sequentially from BFRT1, BFRT2 in T28 respectively.

Also, similarly in FIGs.10A, 10B, and 10C, CR31, CR41 are output sequentially from BFRT3, BFRT4 in T31 respectively, then CN13, CR14 are output sequentially from BFRT3 in T32 respectively, then CN21, CN22 are output sequentially from BFRT4 in T33 respectively, then CN23, CN24 are output sequentially from BFNRT4 in T34 respectively, then BN11, BN12 are output sequentially from BFNRT1 in T35 respectively, then DN11, DN31 are output sequentially from BFNRT2, BFNRT3 in T36 respectively, then DN32, DN33 are output sequentially from BFNRT3 in T37 respectively, and then DN21, DR41 are output sequentially from BFRT1 in T38 respectively.

In addition, similarly in FIGs.11A, 11B, and 11C, DR51, DR61 are output sequentially from BFRT3, BFRT4 in T41 respectively, then DR11, DR31 are output sequentially from BFRT5, BFRT6 in T42 respectively, then DN34, DN35 are output sequentially from BFNRT3 in T43 respectively, then DN36, DN71 are output sequentially from BFNRT3, BFNRT4 in T44 respectively, then DN72, DN73 are output sequentially from BFNRT4 in T45 respectively, then DN74, DN75 are output sequentially from BFNRT4 in T46 respectively, then DN76, DN21 are output sequentially from BFNRT4, BFNRT1 in T47 respectively, and then ER21, ER41 are output sequentially from BFRT1, BFRT2 in T48 respectively.

In the communication method in the communication equipment (buffer assigning method) according to the present embodiment, as shown in FIG.4, the lower round robin is executed in the number of time slots Srt that is assigned to the RT packets decided based on the connection number of calls from the call-connection control portion. In this case, like the lower round robin in the QRT buffer group 103, the looking-up of buffer may be circulated until the stored packets in the RT buffer group 102 are not present.

FIG.12 is a flowchart explaining mainly the lower round robin among the real-time RT buffer groups BFRT1 to BFRT6 according to the present variation. First, in step S1201, initialization of various parameters is carried out, like steps S401, S402 in FIG.4.

Then, in step S1202, it is checked whether or not the stored packet is present in the RT buffer group 102. If the stored packet is present, the process goes to step S1203 where the looking-up of buffer enters into the real-time RT buffer groups BFRT1 to BFRT6. If the stored packet is not present, the process goes to Pqrt (step S501) in FIG.5.

Then, in step S1203, it is checked whether or not the stored packet is present in the n-th RT buffer BFRTn (n=1 to 6). If the stored packet is present, the process goes to step S1204 where the stored packet is output and the EL counter is incremented.

Then, in step S1205, it is checked whether or not the EL counter=2 is satisfied. If the EL counter=2 is satisfied, the process goes to step S1206 where the TS counter is incremented to set the time slot to the subsequent time slot and the EL counter is reset to the initial value (0). Then, if it is checked in step S1207 that the incremented TS counter=8 is not satisfied, or if the EL counter=2 is not satisfied in step S1205, or if the stored packet is not present in the n-th RT buffer BFRTn in step S1203, the process goes to step S1209. In this case, it is indicated that, if the TS counter=8 is satisfied in step S1207, the assigment of the current frame is completed. Therefore, the TS counter is reset to the initial value (0) in step S1208, and then the process goes to step S1209.

Then, the parameter n is incremented in step S1209, then it is checked in step S1210 whether or not n=7 is not satisfied, then the process goes to step S1202 where the lower round robin among the real-time RT buffer group BFRT1 to BFRT6 is advanced. In this case, if n=7 is satisfied in step S1210, the value of n must be reset to 1 in step S1211.

Also, in the above embodiment, the mode in which the communication equipment according to the present embodiment is applied to the base station BS1 in the communication system in FIG.2 is explained. But the present invention is not limited to this mode. For example, the communication method according to the present embodiment can be applied to the signal assignment of up signals and down signals among child stations MS31 to MS33 and the base station BS1 by applying the configuration of the communication equipment according to the present embodiment to the mobile station MS3.

As described above, according to the communication equipment (base station BS1) and the communication method of the present embodiment, the packets having different qualities of service are distributed to three buffer groups such as the real-time RT buffer group, the quasi real-time QRT buffer group, and the non real-time NRT buffer group every quality of service by the packet discriminating portion 101 (discriminating step) based on the additional information attached to the packets, then the packets are stored in the buffers in response to the empty states of respective buffers in the buffer groups, then the looking-up of buffer is circulated by the boundary assignment control portion 105 (boundary assignment controlling step) through three buffer groups every time slot to check the presence of the stored packet, then the looking-up of buffer is circulated through respective buffers of the buffer groups having the stored packet to take out the stored packet sequentially, and then the transmitted output ot can be obtained by multiplexing the codes of the packets, which are picked up by the boundary assignment control portion 105 (boundary assignment controlling step), every time slot by virtue of the CDMA-multiplexing processing portion 111 (CDMA-multiplexing processing step). Therefore, the packets having the almost same quality of service can be assigned on the same time base. As a result, disadvantages such as reduction in quality generated by multiplexing the signals having different qualities of service simultaneously, etc., which are caused in the CDMA in the related art, can be overcome, and also the guarantee of the quality of service can be achieved easily without fail.

Also, in the boundary assignment control portion 105 (boundary assignment controlling step), the assignment of the packet to the time slot is carried out in order of the real-time RT, the quasi real-time QRT, and the non real-time NRT, and also the number of time slots is set every quality of service so as to change with a time. Therefore, the sound data, etc. having several restriction on the delay quality can be assigned preferentially, and also the guarantee of the delay quality can be achieved easily without fail.

In addition, the connection of call to other station is controlled by the call-connection control portion (call- connection controlling step), and then the number of time slots for the real-time RT buffer is set by the boundary assignment control portion 105 (boundary assignment controlling step) based on the numbers of connected calls, which are connected by the call-connection control portion (call-connection controlling step) to be assigned to the particular time (head) in the frame. Therefore, the delay jitter can be reduced. According to this, the larger delay jitter is generated in the latter-half frame in the example in the related art (FIGs.15A, 15B, and 15C), while no delay jitter is generated in the present embodiment (FIGs.7A, 7B, and 7C). As a result, an amount of hardware (buffer capacity) to absorb the delay jitter can be suppressed as small as possible, and the delay of sound is small because of the small maximum delay.

In this case, because the assignment of the real-time RT packet is executed preferentially, the assignments of the quasi real-time QRT and the non real-time NRT are subjected to the inconvenience. However, since the quasi real-time QRT is also preferentially assigned in the period other than the times (time slots) that are occupied by the real-time RT, such assignments are affected merely by the small delay. Therefore, the non real-time NRT is still subjected to the inconvenience, but the electronic mail, etc. do not need essentially so severe requirements for the delay quality and also delays are accumulated on the receiver side. As a result, even if the delay jitter is increased, increase in the receiving buffers is not requested and also the users are not anxious about the delay time, and thus no substantial problem is caused.

The present invention is explained in detail with reference to the particular embodiments. It is apparent for those skilled in the art that various variations and modifications may be applied without departing the scope and range of the present invention.

This application is filed based on Japanese Patent Application No.2001-079207 filed on March 19, 2001, and contents thereof are incorporated herein by the reference.

### <Industrial Applicability>

As explained above, according to the communication equipment, the communication method, the communication program, the recording medium, the mobile station, the base station, and the communication system of the present invention, the signals having different qualities of service are distributed by the discriminating means (discriminating step) every quality of service, then the signals distributed every quality of service are assigned to different times by the boundary assignment control means (boundary assignment controlling step), and then the signals are code-multiplexed by the code-multiplexing processing means (code-multiplexing processing step) every time that is assigned by the boundary assignment controlling means (boundary assignment controlling step). Therefore, the packets having the almost same quality of service can be assigned on the same time base, and also the guarantee of the quality of service can be achieved easily without fail.

According to the present embodiment, the packets having different qualities of service are distributed to plural buffer groups, which are partitioned into groups every quality of service by the discriminating means (discriminating step), based on the additional information attached to the packets, then the packets stored in a plurality of buffer groups are assigned to different times every buffer group by the boundary assignment controlling means (boundary assignment controlling step) to pick up the packets, and then the packets that are picked up by the boundary assignment controlling means (boundary assignment controlling step) every different time are code-multiplexed by the code-multiplexing processing means (code-multiplexing processing step). Therefore, the packets having the almost same quality of service can be assigned on the same time base, and also the guarantee of the quality of service can be achieved easily without fail.

Also, according to the present embodiment, the packets having different qualities of service are distributed to K buffer groups, which are divided into groups from the first group to the K-th group (K is the integral number in excess of 2), every quality of service by the discriminating means (discriminating step) based on the additional information attached to the packets to store in the buffers in response to the empty states of respective buffers in the buffer groups, then the looking-up of buffer is circulated through the K buffer groups every predetermined unit time by the boundary assignment controlling means (boundary assignment controlling step) to check the presence of the stored packets, then the looking-up of buffer is circulated through respective buffers of the buffer groups having the stored packets to take out the stored packets sequentially, and then the packets that are picked up by the boundary assignment controlling means (boundary assignment controlling step are code-multiplexed every unit time by the code-multiplexing processing means (code-multiplexing processing step). Therefore, the packets having the almost same quality of service can be assigned on the same time base, and also the guarantee of the quality of service can be achieved easily.

Also, according to the present embodiment, in the boundary assignment controlling means (boundary assignment controlling step), when the signals or the packets are to be assigned to different times or the unit time, the time width or the number of unit times every quality of service is set so as to change with a time. Therefore, the signals or the packets having particular quality of service can be assigned preferentially in response to the restriction of the quality of service and the received states (stored amount in the buffers) of the signals or the packets, and also the guarantee of the delay quality can be achieved easily.

In addition, according to the present embodiment, in the boundary assignment controlling means (boundary assignment controlling step), the assignment of the signals or the packets to different times or the unit time is carried out in compliance with the priority based on the quality of service of the signals or the packets. Therefore, if the signals or the packets having the severe limitation of the quality of service (delay quality), e.g., the severe limitation of the delay time, are assigned preferentially, the guarantee of the quality of service (delay quality) can be achieved easily without fail.

## Claims

1. A communication equipment comprising:
a discriminating means for distributing signals having different qualities of service every quality of service;
a boundary assignment controlling means for assigning the signals, which are distributed every quality of service, to different times; and
a code-multiplexing processing means for code-multiplexing the signals every time that is assigned by the boundary assignment controlling means.

2. A communication equipment comprising:
a plurality of buffer groups partitioned into groups every quality of service;
a discriminating means for distributing packets having different qualities of service into the plurality of buffer groups based on additional information attached to the packets;
a boundary assignment controlling means for assigning the packets, which are stored in the plurality of buffer groups, to different times every buffer group to pick up the packets; and
a code-multiplexing processing means for code-multiplexing the packets that are picked up by the boundary assignment controlling means every different time.

3. A communication equipment comprising:
K (K is an integral number in excess of 2) buffer groups partitioned into K groups from a first group to a K-th group every quality of service;
a discriminating means for distributing packets having different qualities of service into the K buffer groups based on additional information attached to the packets to store the packets in response to empty states of respective buffers in the K buffer groups;
a boundary assignment controlling means for circulating through the K buffer groups every predetermined unit time to check presence of stored packets, and circulating through respective buffers in the buffer group having the stored packet to pick up the stored packets sequentially; and
a code-multiplexing processing means for code-multiplexing the packets that are picked up by the boundary assignment controlling means every unit time.

4. The communication equipment according to any of claims 1 to 3,
wherein the boundary assignment controlling means sets a time width or a number of unit times every quality of service to change with a time when the signals or the packets are to be assigned to the different times or the unit time.

5. The communication equipment according to any of claims 1 to 4,
wherein the boundary assignment controlling means executes an assignment of the signals or the packets to the different times or the unit time in compliance with priorities based on the quality of service of the signals or the packets.

6. The communication equipment according to any of claims 1 to 5,
wherein the quality of service is a delay quality that represents delay tolerance or fluctuation in data transmission.

7. The communication equipment according to claim 6,
wherein the delay quality is real time whose degree of delay tolerance is less than a first tolerance, non real time whose degree of delay tolerance is more than a second tolerance, or quasi real time whose degree of delay tolerance is in a range from the first tolerance to the second tolerance.

8. The communication equipment according to claim 6,
wherein the delay quality is real time whose delay fluctuation is less than a first fluctuation threshold, non real time whose delay fluctuation is more than a second fluctuation threshold, or quasi real time whose delay fluctuation is in a range from the first fluctuation threshold to the second fluctuation threshold.

9. The communication equipment according to claim 7 or 8,
wherein the boundary assignment controlling means executes assignment of the signals or the packets to the different times or the unit time in order of the real time, the quasi real time, and the non real time.

10. The communication equipment according to any of claims 1 to 9, further comprising:
a call-connection controlling means for controlling a connection of call to other station;
wherein, when the assignment of the signals or the packets to the different times or the unit time is to be executed at a regular time interval, the boundary assignment controlling means sets a predetermined time width or a predetermined number of unit times to the quality of service with a highest priority at a first interval of the regular time interval based on numbers of connection of call, which are connected by the call-connection controlling means.

11. A communication method comprising:
a discriminating step of distributing signals having different qualities of service every quality of service;
a boundary assignment controlling step of assigning the signals, which are distributed every quality of service, to different times; and
a code-multiplexing processing step of code-multiplexing the signals every time that is assigned by the boundary assignment controlling means.

12. A communication method for a communication equipment having a plurality of buffer groups partitioned into groups every quality of service, comprising:
a discriminating step of distributing packets having different qualities of service into the plurality of buffer groups based on additional information attached to the packets;
a boundary assignment controlling step of assigning the packets, which are stored in the plurality of buffer groups, to different times every buffer group to pick up the packets; and
a code-multiplexing processing step of code-multiplexing the packets that are picked up by the boundary assignment controlling step every different time.

13. A communication method for a communication equipment having K (K is an integral number in excess of 2) buffer groups partitioned into K groups from a first group to a K-th group every quality of service, comprising:
a discriminating step of distributing packets having different qualities of service into the K buffer groups based on additional information attached to the packets to store the packets in response to empty states of respective buffers in the K buffer groups;
a boundary assignment controlling step of circulating through the K buffer groups every predetermined unit time to check presence of stored packets, and circulating through respective buffers in the buffer group having the stored packet to pick up the stored packets sequentially; and
a code-multiplexing processing step of code-multiplexing the packets that are picked up by the boundary assignment controlling step every unit time.

14. The communication method according to any of claims 11 to 13,
wherein the boundary assignment controlling step sets a time width or a number of unit times every quality of service to change with a time when the signals or the packets are to be assigned to the different times or the unit time.

15. The communication method according to any of claims 11 to 14,
wherein the boundary assignment controlling step executes an assignment of the signals or the packets to the different times or the unit time in compliance with priorities based on the quality of service of the signals or the packets.

16. The communication method according to any of claims 11 to 15,
wherein the quality of service is a delay quality that represents delay tolerance or fluctuation in data transmission.

17. The communication method according to claim 16,
wherein the delay quality is real time whose degree of delay tolerance is less than a first tolerance, non real time whose degree of delay tolerance is more than a second tolerance, or quasi real time whose degree of delay tolerance is in a range from the first tolerance to the second tolerance.

18. The communication method according to claim 16,
wherein the delay quality is real time whose delay fluctuation is less than a first fluctuation threshold, non real time whose delay fluctuation is more than a second fluctuation threshold, or quasi real time whose delay fluctuation is in a range from the first fluctuation threshold to the second fluctuation threshold.

19. The communication method according to claim 17 or 18,
wherein the boundary assignment controlling means executes assignment of the signals or the packets to the different times or the unit time in order of the real time, the quasi real time, and the non real time.

20. The communication method according to any of claims 11 to 19, further comprising:
a call-connection controlling step of controlling a connection of call to other station; and
wherein, when the assignment of the signals or the packets to the different times or the unit time is to be executed at a regular time interval, the boundary assignment controlling step sets a predetermined time width or a predetermined number of unit times to the quality of service with a highest priority at a first interval of the regular time interval based on numbers of connection of call, which are connected in the call-connection controlling step.

21. A communication program for causing a computer to execute the communication method set forth in any of claims 11 to 20.

22. A computer-readable recording medium for recording the communication method set forth in any of claims 11 to 20 as a program that is executed by a computer.

23. A mobile station having the communication equipment set forth in any of claims 1 to 10, the communication program set forth in claim 21, or the recording medium set forth in claim 22.

24. A base station having the communication equipment set forth in any of claims 1 to 10, the communication program set forth in claim 21, or the recording medium set forth in claim 22.

25. A communication system having the communication equipment set forth in any of claims 1 to 10, the communication program set forth in claim 21, or the recording medium set forth in claim 22.
